(19) Europäisches Patentamt / European Patent Office / Office européen des brevets

(11) **EP 1 986 264 A1**

(12) **EUROPEAN PATENT APPLICATION**

(43) Date of publication:
**29.10.2008 Bulletin 2008/44**

(51) Int Cl.:
*H01M 8/06* (2006.01)   *C25B 1/02* (2006.01)
*C25B 9/10* (2006.01)

(21) Application number: **07117793.5**

(22) Date of filing: **02.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **26.04.2007 EP 07008545**

(71) Applicant: **Technische Universität München
80333 München (DE)**

(72) Inventors:
• **Rao, Vineet**
  **85748 Garching (DE)**
• **Schreier, Siegfried**
  **85354 Freising (DE)**

(74) Representative: **Herrmann, Franz
Dendorfer & Herrmann
Patentanwälte Partnerschaft
Bayerstrasse 3
80335 München (DE)**

(54) **System for generating electrical energy comprising an electrochemical reformer and a fuel cell**

(57)    A system for generating electrical energy comprises an electrochemical reformer (21) for converting fuel into a fuel gas. The fuel gas is supplied to a separator (33), which removes fuel components from the gas flow to a generator (34), which uses the fuel gas for generating electrical energy. Electrical power needed for the operation of the reformer (21) is supplied by the generator (34). An external electric load (46) can also be supplied with electrical energy.

Fig. 4

EP 1 986 264 A1

**Description**

The invention relates to a system for generating electrical energy comprising:

- a fuel reservoir for storage of an organic fuel;
- an electrochemical converter arranged for the generation of electrical energy by the consumption of the organic fuel and having electrical current outputs connectable to an external load.

Such a system is known from US 55 99 638. The known system comprises an fuel tank in which a mixture of methanol and water is stored. The mixture of water and methanol is circulated past an anode of a cell while oxygen or air is circulated past a cathode of the same cell. A solid electrolyte membrane is disposed between the anode and the cathode of the cell. Systems of this type are also called Direct Methanol Fuel Cells (= DMFC)

Fuel cells of this type are systems, which convert chemical energy into electrical energy. The most important part of the fuel cell is the Membrane Electrode Assembly (= MEA) which comprises a membrane disposed between two catalytically active electrodes, the anode and the cathode. The anode and cathode materials, which could be platinum-based or other ones, are mostly prepared in nanoparticle powder form. The catalyst can be deposited by different processes on the membrane, such as wet coating, screen-printing, decal method or other methods.

The methanol gets deprotonated at the anode of the MEA and the protons thus produced, diffuse through a proton conducting electrolyte and reach at the cathode, where they react with the oxygen supplied to the cathode. The reduction of the protons by oxygen results in the production of water.

Hydroxyl ion (OH-) conducting polymer electrolyte membranes have also recently been used in fuel cells. But these membranes are still under investigation.

If fuels other than methanol are used, the fuel cells are also called Direct Oxidation Fuel Cells (= DOFC). The direct oxidation fuel cells avoid the use of fuel reformers, but also have some drawbacks. DOFCs with a liquid phase on one side and a gas phase on the other side and the polymer electrolyte membrane as a separator run into serious problems since the membranes are not completely tight to fuel and water. This leads to the following problems, which shall be explained taking a DMFC as an example.

One of these problems is methanol crossover. Methanol crossover not only leads to fuel loss but also to mixed potential effects and thus lowers cell voltage. Additionally methanol on the cathode side undergoes heterogeneous oxidation at Pt sites consuming oxygen and thus reduces the oxygen availability for useful electrochemical reaction. In consequence higher stoichiometric flows of oxygen are required.

Methanol crossover also contributes to the problem of cathode flooding which creates the mass transport problem in the cathode. Methanol crossover in DMFC system results in up to 40% fuel loss, reducing the volumetric energy density of the system.

Water crossover also creates the flooding of the cathode, which hinders the oxygen access to the catalyst and deteriorates the performance of the cathode.

High catalyst loading is also required due to the bad cathode performance caused by water and methanol crossover. For example typical cathode loading in Proton Exchange Membrane Fuel Cells (= PEMFC) is 0.4 mg/cm$^2$, but in DOFC it is around 4-5 mg/cm$^2$.

High airflow and stoichiometry on the cathode side is further required to remove the crossed over water, that floods the cathode, and to additionally compensate for the loss of oxygen in parasitic methanol oxidation reactions. The water on the cathode side stems from diffusion processes and electro-osmotic drag and is also produced by electro-chemical reactions and parasitic oxidation processes of methanol at the cathode. This makes a DMFC system more complicated and less efficient, as the air blowers and compressors have to be powered by the DMFC itself, which is problematic especially in portable DMFC systems. The power demand of the compressors and blowers in a DMFC system could reach more than 20% of the overall electrical output of the DMFC stack as discussed in DOHLE, H.; SCHMITZ, H.; BEWER, T.; MERGEL, J.; STOLTEN, D.: Journal of Power Sources 106 (2002) 313-322 and DOHLE, H., MERGEL, J., STOLTEN, D., Journal of power sources 111 (2002) 268-282.

Pressurized cathode operation is required for liquid feed DMFCs to operate at higher temperatures. The elevated pressure helps in controlling the heat losses because of water vaporization. High temperature operation is desirable because of better kinetics at higher temperatures but its realization requires high pressure and thus compressors to create and maintain elevated pressures. The compressors add to the parasitic power requirement of the DMFC system.

Poly-Fluoro Sulphonic Acid (= PFSA) based membranes manufactured by DuPont under the name Nafion are the most widely available proton exchange membranes in the market. But these membranes are permeable to organic fuels (methanol, formic acid, ethanol and other fuels) as well as water and thus cannot work as an effective separator between anode and cathode reactants. Different approaches have been proposed to deal with this problem. Many new polymer electrolytes have been researched for their permeability for methanol and water. Fluorinated, partially fluorinated, non-fluorinated (hydrocarbon and polyarylene), composite membranes (insulator nanoporous matrices filled with inorganic acids) has been investigated. But often a more liquid tight membrane has lower proton conductivity.

Another approach is disclosed in US 62 42 122 B1. In this approach liquid crossover is minimized by using a liquid barrier layer made up of Pd, allowing only protons to pass through. The Pd or Pd alloys placed in the middle of the proton exchange membrane (= PEM) can act as a barrier for water as well as methanol. The Pd foil of the thickness (10-50 microns) can then be coated on both sides with proton conducting polymer. This approach, however, results in high costs, since large amounts of Pd are needed, which is a noble metal and thus costly.

Active methanol concentration control also helps in minimizing the methanol crossover. The amount of methanol, which can crossover to the cathode side in a DMFC, depends on the concentration of methanol on the catalyst layer-membrane interface, and that depends on how much methanol is oxidized in the anode catalyst layer. Taking these points into account and knowing typical current densities of the DMFC, an optimum concentration of methanol in water can be worked out. That is typically around 0.5-2 M Methanol. To maintain the concentration around this optimum requires constant monitoring of concentration and requires a methanol concentration sensor. But even this approach does not completely eliminate methanol crossover and water crossover is simply unaffected.

Methanol tolerant oxygen reduction catalyst at the cathode will make sure that the electrochemical reaction (oxygen reduction) is not hindered by the presence of methanol at the cathode side. Methanol will not undergo chemical oxidation at the catalyst sites, if methanol tolerant catalysts are used. Novel catalysts have been proposed by a number of groups. ALONSO-VANTE, N.; CATTARIN, S.; MUSIANI, M.: Journal of Electroanalytical Chemistry 481 (2000) 200-207 and ALONSO-VANTE, N.; BOGDANOFF, P.; TRIBUTSCH, H.: Journal of Catalysis 190 (2000) 240-246 propose RuSe, YANG, H.; ALONSO-VANTE, N.; LEGER, J. M.; LAMY, C.: Journal of Physical Chemistry B 108 (2004) 1938-1947 propose Pt-Cr and YANG, H.; COUTANCEAU, C.; LEGER, J. M.; ALONSO-VANTE, N.; LAMY, C.: Journal of Electroanalytical Chemistry 576 (2005) 305-313 and YANG H.; VOGEL, W.; LAMY, C.; ALONSO-VANTE, N.: Journal of Physical Chemistry B 108 (2004) 11024-11034 consider Pt-Ni. Furthermore, also Fe and Cobalt tetramethoxy-phenyl-porphyrines have also been proposed for this purpose. But these approaches do not solve the problem of cathode flooding with water and methanol, which creates a mass transport barrier for the oxygen reduction reaction, and thus drastically brings down the performance of the cathode. Furthermore these catalysts are comparatively less active than Pt for the $O_2$ reduction reaction.

US 68 69 716 B2 discloses a DMFC comprising an anode chamber connected to a conduit having an inlet and through which anodic effluent flows are provided. The conduit contains a porous gas separator through which gaseous components of the effluent flow can pass while liquid components are retained.

US 2003/0095872 A1 discloses a DMFC with a pump for pumping methanol into the cell. The pump is driven by carbon dioxide, produced by the electro-chemical reaction at the anode of the fuel cell.

Proceeding from this related art, the present invention seeks to provide an improved system for generating electrical energy.

This object is achieved by a system having the features of the independent claim. Advantageous embodiments and refinements are specified in claims dependent thereon.

In the system the electrochemical converter comprises a reformer provided with electrical current inputs and arranged for converting the fuel from the fuel reservoir into fuel gas provided at a fuel gas outlet of the reformer. Furthermore, the system comprises an electrical current generator having a fuel gas inlet connected to the fuel gas outlet of the reformer and comprising the electrical current outputs. An electrical connection established between generator and reformer is used to supply electrical energy generated by the electrical current generator to the electrical current input of the reformer. Finally, at least one elementary cell of the reformer has a lower operational voltage than at least one elementary cell of the electrical current generator.

The system solves many problems related to conventional DOFCs, for instance fuel and water crossover, low fuel utilization, cathode flooding, requirement of higher air flows, inability to run at elevated temperatures autonomously without cathode pressurization, requirement of high amount of noble metal catalyst and other drawbacks. This is achieved by physically separating anode processes and cathode processes of a prior art DOFC. In particular, the conversion of the fuel into fuel gas and the generation of electrical energy by means of the fuel gas take place at different physical units.

Thus many problems associated with prior art DOFCs can be overcome. In particular the problem of liquid crossover between the anode and the cathode of a prior art DOFC is avoided. Furthermore, the amount of catalyst needed for the fuel gas side of the reformer and for electrodes in the generator of the system can be reduced several times compared to conventional DOFCs. The system also requires an airflow stoichiometry typical of PEMFC and no pressurized operation of the generator is required. Thus less energy is needed for blowers and compressors as it is the case in conventional DOFCs.

In consequence the total volumetric power density will be higher than the power density of prior art DOFCs since very compact reformers can be designed.

In addition the heat management becomes much simpler in the system in comparison to a conventional DOFCs as no liquid needs to be vaporized in the electrical current generator and the stoichiometry of additional gases needed in the electrical current generator is very low as typical of PEMFC. In consequence the heat losses are reduced. This allows to run the system at high temperatures where kinetics of electrochemical reactions become considerably faster.

Furthermore, the pressure of the fuel gas and some waste gas is self-generated in the reformer. The self-generated pressure helps in controlling heat losses caused by the vaporization of liquids and by the transport of the vapor out of the reformer. The build-up of self-generated pressure reduces these heat losses since the high pressure increases the boiling point of the liquids in the reformer. For similar current density the outgoing gas flows in the reformer of the system is consequently much smaller than in conventional DMFCs. Self-generated pressure allows autonomous high temperature operation of the whole system. In a DOFC the pressure has to be created externally by using compressors.

The improvement in the operation of the air/$O_2$ electrode in comparison to a conventional DMFC allows to reduce the effective loading of the electrodes on the fuel gas side of the reformer and of the electrodes in the generator and autonomous high temperature operation allows to considerably reduce the catalyst loading of the fuel side electrode of the reformer depending on the temperature of operation.

With the system it is possible to reach higher volumetric power densities compared to DOFCs, because the reformer and the electrical current generator can be operated at higher temperatures, which results in higher current densities.

Due to these advantages the system can be designed as a compact portable device. If at least one elementary cell of the reformer has a lower operational voltage than at least one elementary cell of the electric current generator the system can be designed as a energy self sufficient device. In these device energy needed for the reformer is supplied by the generator, so that disregarding the fuel, no external energy sources is needed for the operation of the system.

In one embodiment the reformer comprises electrodes, which are disposed on a fuel side and a fuel gas side of a membrane which is transmissive for the fuel gas. Similarly the generator comprises also electrodes disposed on both sides of the membrane which is transmissive for components of the fuel gas. Such an arrangement allows for the optimization of the reformer and the electrical current generator.

In another embodiment the electrodes are loaded with catalysts in order to facilitate the chemical reactions on the surface of the electrodes. In particular the catalyst loading on the fuel side of the reformer is chosen to be higher than the catalyst loading of all other electrodes for reducing the amount of catalyst and for reducing the production costs of the system.

Preferably a fuel tolerant catalyst is used within the electrical current generator so that the catalytic effect of the catalyst in the generator is not affected by the small amounts of fuel which are reaching at the fuel gas electrode of the generator.

The operational temperature of the reformer and of the generator is chosen such the system power per total catalyst loading exceeds 100 W/g at an actual power density above 100 mW/cm$^2$ and at an energy conversion effiency between 10% and 30% or that the system power per total catalyst loading exceeds 30 W/g at an actual power density above 40 mW/cm$^2$ and an energy conversion effiency above 30%. Thus, the catalyst loading needed for the system can be minimized which will also result in lower costs of production.

If the reformer, the generator and the load are connected in series the sum of the voltages on the electrical current outputs of the generator is preferably greater than the sum of the voltages applied to the electrical current inputs of the reformer. If the sum of the voltages on the electrical current outputs of the generator is greater than the sum of the voltages applied to the electrical current inputs of the reformer the power of the current generator is greater than the power needed by the reformer.

Between the reformer and the generator, a separator can be inserted, which separates gases from the liquids. The separator may be a condenser or filter made from a porous material. The fuel vapor, which will escape the separator together with the fuel gas will not considerably affect the performance of the generator.

The system can also work with a mixed output of fuel gas and waste gas from the reformer. Such a reformer with a mixed flow output containing for instance waste gas from the fuel side electrode and fuel gas from an electrode on the fuel gas side has the potential for miniaturization as the conventional stack architecture is no longer necessary. In addition, single flow stream out of the reformer simplifies the Balance Of Plant (= BOP) of the system, as it would require a single separator and a single after burner.

In a simplified embodiment the electrical current generator is split into a number of subunits. At least one of the subunits is used to supply the necessary power to the reformer, whereas the other subunits are used to produce electrical power for the external load. In such an arrangement no electronic control unit is needed for controlling the reformer and the generator, because the operational points of the subunits adapt themselves.

The voltage applied to the reformer is preferably controlled by an electronic controlling unit. The power for the controller unit is supplied by the electrical current generator. Thus, the operational parameter of the reformer or the generator can be easily adapted to the requirements on the power output of the system.

The separation of reformer and generator can also be used to choose different operational temperatures for the reformer and the generator. For instance, the operational temperature of the reformer can be higher than the operational temperature of the generator resulting in faster chemical processes at the electrode.

Similarly, the reformer and the generator can also be operated at different pressures. Thus the reformer can be operated at a higher pressure than the generator enabling high temperature operation of the reformer.

The mediator energy carrier can be molecular $H_2$. So essentially, fuel oxidation reaction gives first molecular $H_2$ in the reformer, which then is delivered to the generator, which works as a $H_2/O_2$ fuel cell. The $H_2$ acts as good energy carrier as the $H_2$ evolution and $H_2$ oxidation reactions are one of the fastest possible electrochemical reactions with very small overvoltage losses. In other words, the fuel is electrolyzed in one cell and then hydrogen thus produced is fed to the other cell that operates like a $H_2/O_2$ PEMFC. The whole operation is sustained autonomously by supplying power at appropriate potential from the generator to the reformer. The reformer will require similar potential of operation, as the anode overvoltage in a DOFC.

If hydrogen is used as a fuel gas, the catalyst used in the electrodes are preferably based on platinum or an alloy made from platinum or ruthenium. In particular the electrode on the fuel gas side in the generator is provided with a catalyst based on platinum and ruthenium. However, other catalyst based on Sn, Mo or W may also be used.

Further advantages and properties of the present invention are disclosed in the following description, in which exemplary embodiments of the present invention are explained in detail on the basis of the drawings:

Figure 1      shows a block diagram of a prior art acidic Direct Oxidation Fuel Cell (= DOFC);

Figure 2      is a diagram with the anode and cathode over-potentials and the voltage-current-characteristic of a fuel cell according to Figure 1;

Figure 3      shows a cross section of a prior art alkaline Direct Oxidation Fuel Cell (= DOFC);

Figure 4      shows a block diagram of a system for generating electrical energy with an electrolyzer and a separate fuel cell;

Figure 5      is a diagram showing the current densities measured on different electrolyzers of a system according to Figure 4;

Figure 6      is a diagram showing the voltage-current-characteristics of various components of systems according to Figure 4 with different catalyst loadings;

Figure 7      is a diagram illustrating the dependency of the power density on the current of the system according to Figure 4;

Figure 8      is a diagram, which contains voltage-current-characteristics of electrolyzers with different cathode catalyst loadings;

Figure 9      is a block diagram illustrating the effective catalyst loading;

Figure 10      depicts the structure of a porous membrane-electrode-assembly;

Figure 11      shows an embodiment of a system with a separate flow of hydrogen and carbon dioxide;

Figure 12      shows an embodiment of a system with a mixed flow of hydrogen and carbon dioxide;

Figure 13      depicts an block diagram of a system in which the electrolyzer is placed in a fuel reservoir;

Figure 14      shows an basic electric circuit diagram of a system with the fuel cell and electrolyzer delivering electrical power to an external load;

Figure 15      is another circuit diagram of a system comprising a fuel cell and an electrolyzer, in which the fuel cell and the electrolyzer are connected in parallel;

Figure 16      is a block diagram of an embodiment, in which a subunit of the generator is producing the power needed for the reformer whereas another subunit is generating the electrical power for an external load;

Figure 17      is a block diagram of a modified embodiment of the system according to Figure 16;

Figure 18    is another modified embodiment of the system according to Figure 16;

Figure 19    is a system according to Figure 16 with an additional electronic control unit;

Figure 20    is a block diagram illustrating the flow of energy within a system for generating power having an electrolyzer and a separate fuel cell;

Figure 21    is a block diagram showing more details of a design of system for generating energy;

Figure 22    is a diagram showing the dependency of the current-voltage-characteristics of an electrolyzer on temperature; and

Figure 23    is a diagram depicting the voltage-current-characteristic and the dependency of the power output on the current density of a fuel cell.

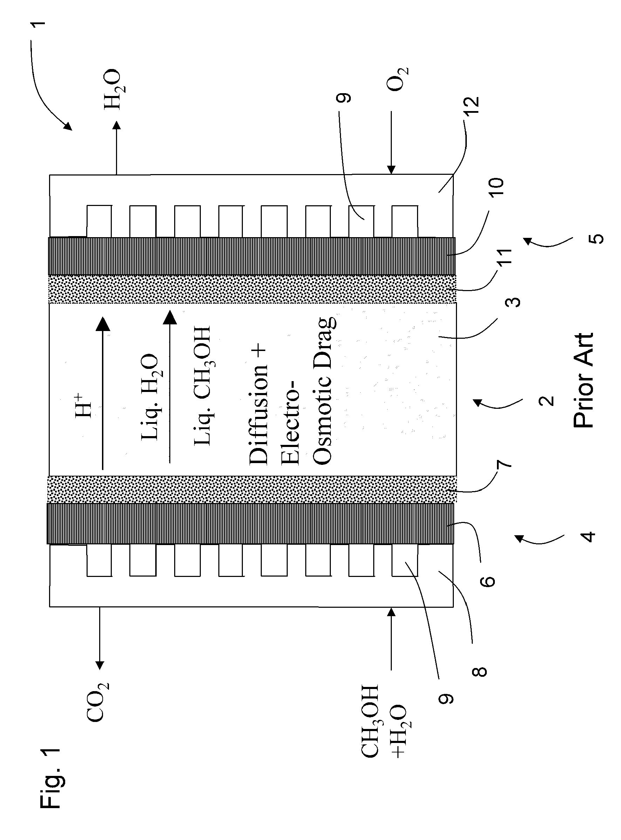

Figure 1 depicts the working principle of a Direct Oxidation Fuel Cell (= DOFC) 1 which uses methanol. Such a system is also called Direct Methanol Fuel Cell (= DMFC). The most important component of the DOFC 1 is the Membrane Electrode Assembly (= MEA) 2, which consists of a polymer electrolyte membrane 3 also called Proton Exchange Membrane (= PEM), which is capable of conducting protons and has two electrodes on each side, in particular anode 4 and cathode 5.

The anode 4 comprises a diffusion layer 6 and a catalyst layer 7. The catalyst layer 7 is made up of a catalyst which is capable of oxidizing a fuel, for instance methanol, which is transported to the diffusion layer 6 by means of a plate 8 having flow channels 9. Each organic fuel can have its own optimized catalyst. For example, for methanol oxidation in acidic electrolyte, PtRu (1:1) is known to be the best catalyst. Similarly for ethanol oxidation the optimized catalyst known up to now is PtSn and a Pd based catalyst is reported to be the most efficient catalyst for formic acid oxidation.

The cathode 5 comprises also a diffusion layer 10 and a catalyst layer 11. The catalyst layer 11 is made up of a catalyst, which is capable of reducing $O_2$ to $H_2O$ by taking protons coming from the anode 4 and $O_2$, which is fed to the diffusion layer 10 via a plate 12. Generally Pt based catalyst show good activity for $O_2$ reduction process. But other catalysts like RuSe, Pt-Cr and Pt-Ni have also been proposed for the same purpose. In particular RuSe is methanol tolerant but also has a lower activity than Pt.

If the DOFC 1 is placed in a stack the the plates 8 and 9 may be replaced by bipolar plates.

In the DOFC 1 the organic fuel is oxidized at the anode 4 to protons and $CO_2$. The protons flow through the electrolyte membrane 3 to the cathode 5, where they are used in the cathodic $O_2$ reduction process producing water.

$$CH_3OH + H_2O \rightarrow 6H^+ + CO_2 + 6e^- \qquad \text{at Anode} \qquad (1)$$

$$3/2\ O_2 + 6H^+ + 6e^- \rightarrow 3H_2O \qquad \text{at Cathode} \qquad (2)$$

In the DOFC 1 the feed of the anode 4 is generally a fuel water mixture, as water is needed in the oxidation reaction. The Cathode 5 is fed with air. But the proton-exchange membrane 3, which conducts protons, is not completely tight for liquids. The water and methanol molecules permeate to the side of the cathode 5 by two mechanisms namely diffusion and electro osmotic drag. Diffusion is driven by the concentration gradient, as we have almost unity concentration on the anode side and zero concentration on cathode side due to air on the cathode side of the MEA. Electro osmosis is the process in which the protons drag the water molecules which are part of their solvation shell from the anode 4 to the cathode 5. Both these mechanisms transport water and fuel to the cathode side, which leads to methanol crossover and cathode flooding. Methanol crossover or fuel crossover from the anode to the cathode side affects the functioning of the cathode 5 in a way that leads to mixed potential effects because of the mixing of reactants.

The crossed-over fuel also undergoes chemical heterogeneous oxidation on active catalyst (Pt) sites consuming oxygen and thus producing heat and $CO_2$ and water. This parasitic parallel non-electrochemical reaction not only leads to fuel loss but also hinders the $O_2$ supply for the useful electrochemical $O_2$ reduction reaction. Thus it causes mass-transport overpotential losses on the cathode side.

Cathode flooding is the phenomena caused by the liquid water, which comes to the cathode side by diffusion or electro-osmotic drag from the aqueous phase anode side, and also caused by the water produced in the parasitic oxidation of crossed-over methanol at the cathode side of the DOFC 1. This liquid water can create a water film barrier in the diffusion layer 10 and the catalyst layer 11. This liquid water film hinders the $O_2$ diffusion to the catalyst layer 11 and thus gives rise to the mass-transport overpotential losses on the cathode 5. Using an appropriate hydrophobic material in the catalyst layer 11 and diffusion layer 10 can solve the problem of cathode flooding to some extent as it is solved in fuel cell, which produces electrical power from $H_2$ and $O_2$. This type of fuel cell is also referred to as proton exchange membrane fuel cell (= PEMFC). In comparison to the cathode flooding in PEMFCs, cathode flooding in the DOFC 1 is caused by the presence of aqueous anode 4 which leads to much higher water and fuel crossover rates. It should be noted, that all organic fuels permeate through the PEM to different extent.

In the DOFC 1 there is excess liquid water at the cathode 5. Air flow at the cathode 5 leads to water vaporization. With higher operating temperatures more and more water is vaporized leading to heat losses. The electrical efficiency of the DOFC 1 is generally low. About 20 to 30% of the available energy is converted into electrical energy. The rest is converted into heat energy. The crossed-over fuel is also a source of heat as it is completely oxidized at the cathode side. But still with increasing temperature and air flow rates the heat lost because of water vaporization at the cathode side becomes greater than the heat produced. One way to avoid the heat loss from the cathode side is to operate the cathode side at elevated pressures. The elevated pressures reduce the water vaporization and thus reduce the heat loss. But the elevated pressures at the cathode side require compressors and blowers, which consume a significant part (15 - 20%) of the electrical power output of the DOFC 1, and also increase the volume and the complexity of the system.

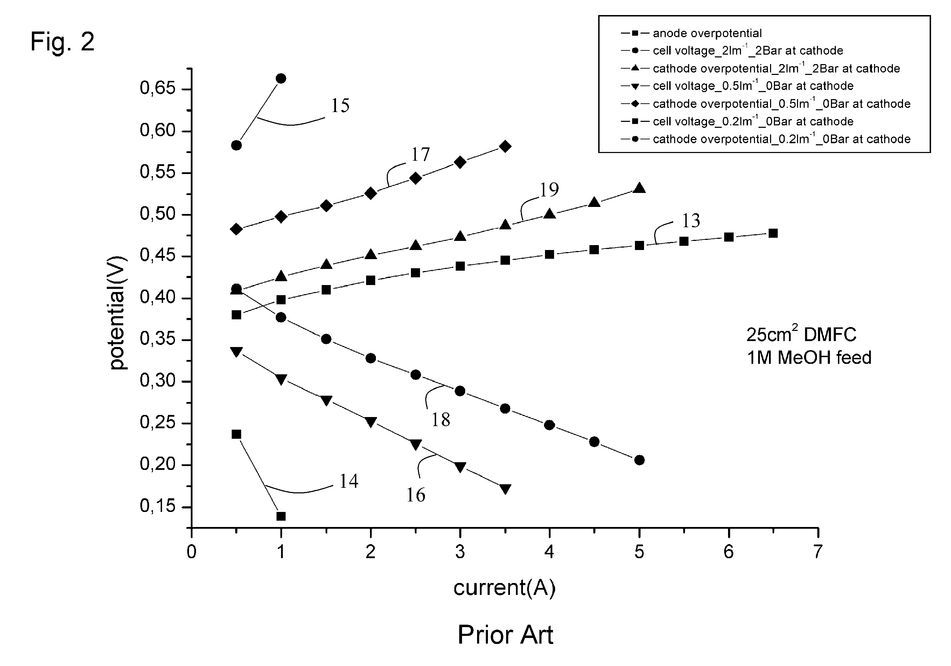

Figure 2 shows the performance of the DOFC 1 as a function of cathode operating conditions, in particular air flow rate and pressure. The anode overpotential as a function of current is also shown. Since the cathode conditions do not affect the anode 4, the cathode overpotential as a function of current can be deduced if the cell U-I characteristics and the anode half-cell characteristic, and the cell resistance is known. The cathode overpotential are shown in Figure 2 for different cathode operating conditions. Curve 13 depicts the anode overpotential of the DOFC 1, in which the membrane electrode assembly 2 is 25 $m^2$ large and in which fuel with 1 M methanol is feeded to the anode side of the DOFC 1. Furthermore, the cell voltage 14 and a cathode overpotential 15 illustrate the behaviour of the DOFC 1 at the flow rate of 0.2 l per minute and a pressure of 0 bar at the cathode 5. Furthermore, the voltage 16 and the corresponding cathode overpotential 17 illustrate the behaviour of the DOFC 1 at a flow rate of 0.5 l per minute and a pressure of 0 bar at the cathode 5. The cell voltage 18 and a corresponding cathode overpotential 19 finally show the behaviour of the fuel cell at a flow rate of 2 l per minute and a pressure of 2 bar at the cathode.

As the air flow rate is reduced the cathode over potentials rises strongly, even though the flow stoichiometry is always above 10. These experiments show the impact of cathode flooding because of water and methanol crossover. The actual values of the cathode overpotentials will depend on the cathode catalyst loading, properties of the membrane 3, methanol feed concentration on the anode side, air flow stoichiometry, pressure of air and type of flow field on the cathode side.

Since the kinetics of fuel cell processes is better in alkaline medium, solid alkaline anion exchange membranes which have OH- as the mobile anion may help in improving fuel cells.

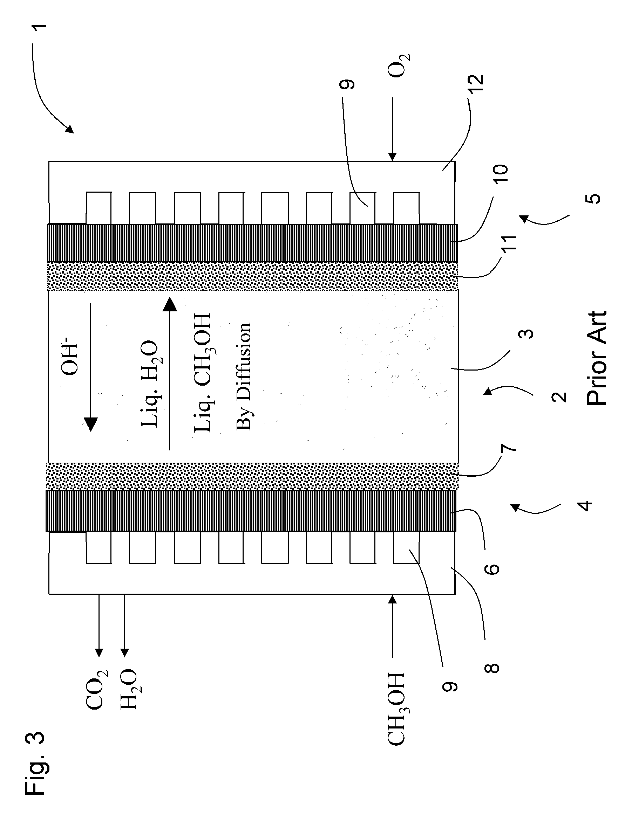

Figure 3 shows a modified embodiment of the DOFC 1 in which the membrane 3 is a solid Alkaline Anion Exchange Membrane (= AAEM). In case the AAEM is used, some of the processes are reversed. Now water is produced at the anode 4 rather than cathode 5. But still there will be fuel and water diffusion from the liquid phase anode 4 to gas phase cathode 5 simply because of concentration gradient through the AAEM.

1. Functional Principle

The solution for these problems is based on separating anode and cathode processes in the DOFC 1. Splitting the anode and cathode processes makes it possible that cathodic processes ($O_2$ reduction) can take place in gas phase where it is most efficient, without much liquid interference, and anode processes (organic fuel oxidation, for example methanol oxidation) can take place in a liquid phase.

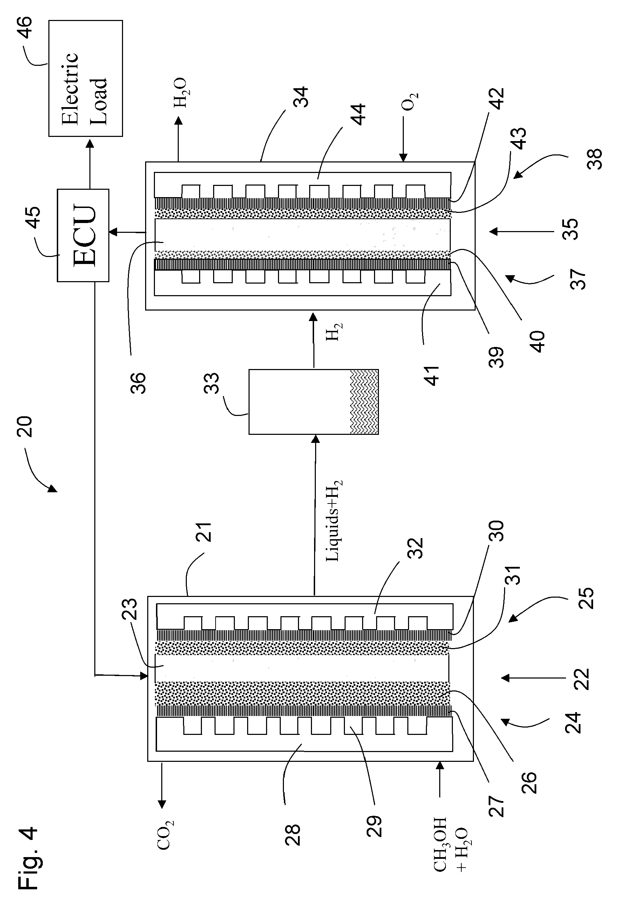

One possible way to achieve this is shown in Figure 4, which depicts an Electrolyzer Based Direct Methanol Fuel Cell (= EDMFC) 20. The organic fuel methanol is oxidized to $H_2$ and $CO_2$ in an electrolyzer 21. The electrolyzer 21 comprises an membrane electrode assembly 22 having a membrane 23 with an anode 24 and a cathode 25 on both sides. The anode 24 comprises a diffusion layer 26 and a catalyst layer 27. On the anode 24 a plate 28 containing flow channels 29 is disposed. The cathode 25 comprises also a diffusion layer 30 and a catalyst layer 31 on which a plate 32 is disposed. The $H_2$ is produced at the cathode 25 of the electrolyzer 21. Thereafter the $H_2$ is separated from the crossed over water and methanol by a gas liquid separator 33, which might be a condenser.

In a simplified embodiment, the EDMFC 20 can also be designed without separator 33. In such an embodiment the electrolyzer 21 and a subsequent fuel cell 34 are, for instance, directly connected with a pipe.

The outgoing stream of the separator 33 contains $H_2$. It can also contain small amounts of the methanol and water vapors, some $CO_2$ and other products of methanol oxidation reactions, which diffused from the anode 24 to the cathode 25. The stream of hydrogen is then fed to the fuel cell 34, where it can be readily consumed for electrical power generation. The fuel cell 34 works like a conventional PEMFC, using hydrogen and air. The fuel cell 34 further comprises a membrane electrode assembly 35 with a membrane 36, an anode 37 and a cathode 38. The anode 37 comprises a diffusion layer 39 and a catalyst layer 40 on which a plate 41 is disposed. Similarly the cathode 38 is composed of a diffusion layer 42, a catalyst layer 43 and a plate 44.

The power distribution can be managed by an Electronic Control Unit (= ECU) 45, which can simultaneously feed an electric load 46 and the electrolyzer 21 and all other ancillary units like pumps, blowers, sensors, valves and other devices. An appropriate fraction of the power output of the fuel cell 34 is supplied to the electrolyzer 21. The remaining power is available for the external electric load 46.

The power management in the EDMFC 20 can also be realized without ECU 45. For example, the electrical working points of the electrical components of the system can be matched in an appropriate way. A simplified power balance is discussed in section 4.1. The EDMFC 20 also works if the electrolyzer 21 provides a mixed gas output of $H_2$ and $CO_2$. Electrolyzers with mixed gas output could contribute towards miniaturization of the EDMFC system. The anode, cathode and overall reactions of the electrolyzer 21 and the fuel cell 18 are listed in equations 3-8.

Reactions within electrolyzer 21:

$$\text{Anode: } CH_3OH + H_2O \rightarrow 6H^+ + CO_2 + 6e^- \qquad (3)$$

$$\text{Cathode: } 6H^+ + 6e^- \rightarrow 3H_2 \qquad (4)$$

$$\text{Overall reaction: } CH_3OH + H_2O \rightarrow CO_2 + 3H_2 \qquad (5)$$

Reactions within fuel cell 34:

$$\text{Anode: } 2H_2 \rightarrow 2 H^+ + 2e\text{-} \qquad (6)$$

$$\text{Cathode: } 2H^+ + 1/2 \, O_2 + 2e^- \rightarrow H_2O \qquad (7)$$

$$\text{Overall reaction: } H_2 + 1/2 \, O_2 \rightarrow H_2O \qquad (8)$$

In an experiment for demonstrating the working principle of the EDMFC 20, hydrogen was produced by the oxidation of methanol in a stack consisting of two electrolyzer 21 connected in series. The current through the electrolyzers 21 was controlled by a control unit keeping the voltages on the electrolyzers 21 at a constant value. The hydrogen produced by both electrolyzers 21 was conducted through a condenser. In the condenser the water and the methanol were condensed so that only hydrogen was supplied to the fuel cell.

The electrodes of the electrolyzers 21 and of the fuel cell 34 were provided with a simple meander shaped flow field. The catalyst loading of the anode 37 of the fuel cell 34 was 0.45 mg/cm$^2$ Pt-Ru and the catalyst loading of the cathode was 0.4 mg/cm$^2$ Pt. The membrane of the electrolyzer 21 was made from Nafion 112 and the anodes 24 were provided with an unsupported catalyst loading of 3.9 mg/cm$^2$ Pt-Ru whereas the cathodes 25 comprised a catalyst loading of 0.5 mg/cm$^2$ Pt using carbon supported catalyst 40% Pt/C.

The electrolyzers 21 were operated at 90°C whereas the fuel cell 34 had an operational temperature of 70°C. The condenser worked at room temperature. The λ ratio of air was 2.5 and the λ ratio of hydrogen was adjusted slightly above stochiometry corresponding to a current of 0.5 to 1.5 A. The effective area of the membrane in the electrolyzer was two times 25 cm$^2$ resulting in a total area of 50 cm$^2$. The effective area of the fuel cell amounts to 25 cm$^2$ resulting in a total area of 75 cm$^2$. The pressure on the cathode side of the electrolyzers 21 was kept at an absolute pressure of 2 bar.

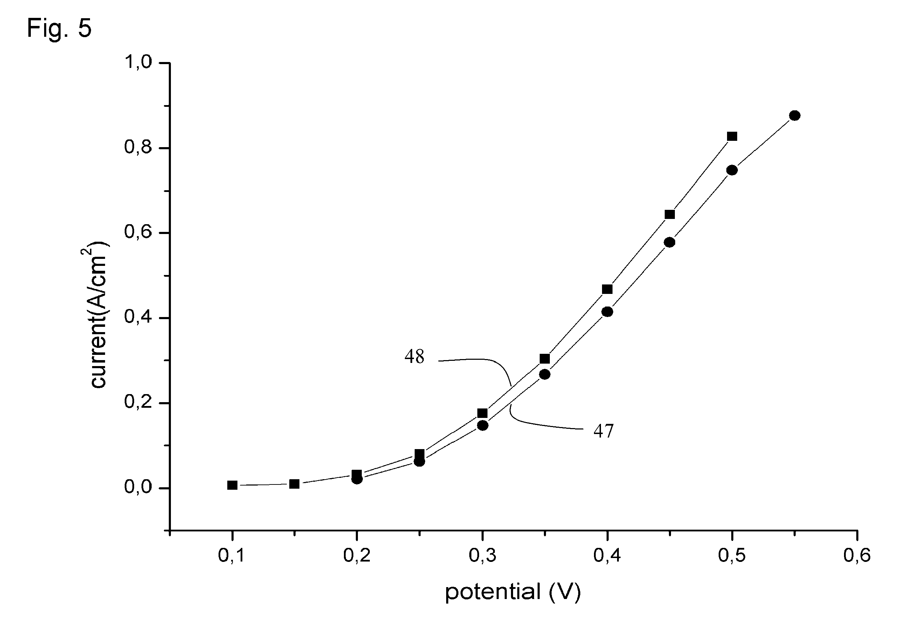

Figure 5 shows a voltage-current density-characteristic 47 and a voltage-current density-characteristic 48 of both electrolyzers 21.

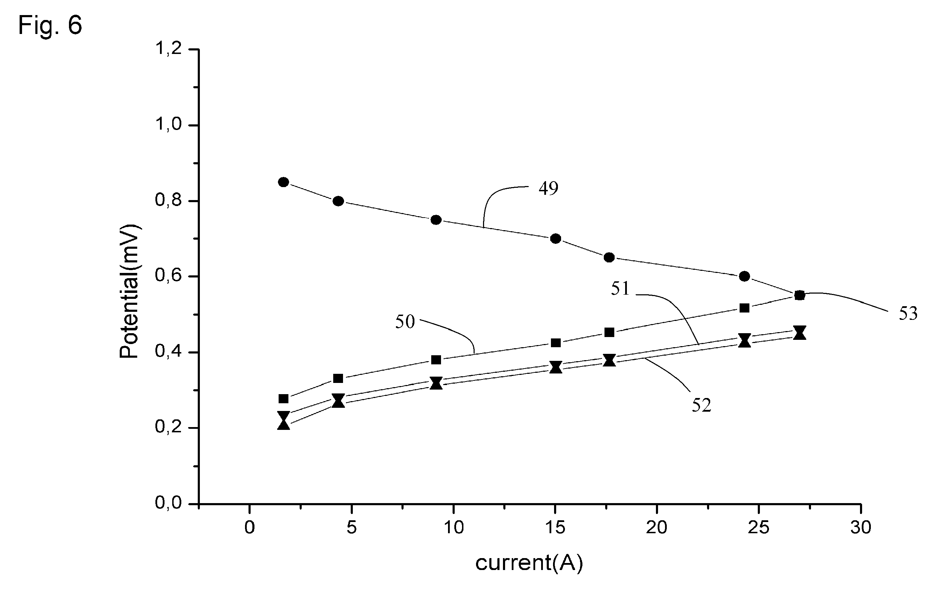

Figure 6 shows a voltage-current-characteristic 49 of the fuel cell 34 and a voltage-current-characteristic 50 of the stack of electrolyzers 21. This stack of electrolyzers has already been used for more than 100 hours. Another voltage-current-characteristic 51 represent the operational behaviour of a new electrolyzer stack and a voltage-current-characteristic 52 depicts the operational behaviour of one of the electrolyzer 21, whose voltage-current density-characteristic 48 has been displayed in Figure 5.

The current values displayed in Figure 6 correspond to the current produced by the fuel cell 34. Within the electrolyzers 21 excessive hydrogen corresponding to an electrical current of 0.5 to 1.5 A has been produced. In consequence there was always a small flow of hydrogen through the fuel cell 34. Therefore, the unused hydrogen has been taken into account as system loss.

The difference between the voltage value of the voltage-current-characteristic 49 of the fuel cell and the voltage value of the voltage-current-characteristic 50 of the electrolyzer stack multiplied with the corresponding current value results in the system power of the combined stack of electrolyzers 21 and the fuel cell 34, corresponding to the system power of an arrangement such as the EDMFC 20. At a crossing point 53, the system power equal zero. At the crossing point 53 the same amount of power is needed in the stack of electrolyzers 21 for the production of hydrogen as is generated in the fuel cell 34.

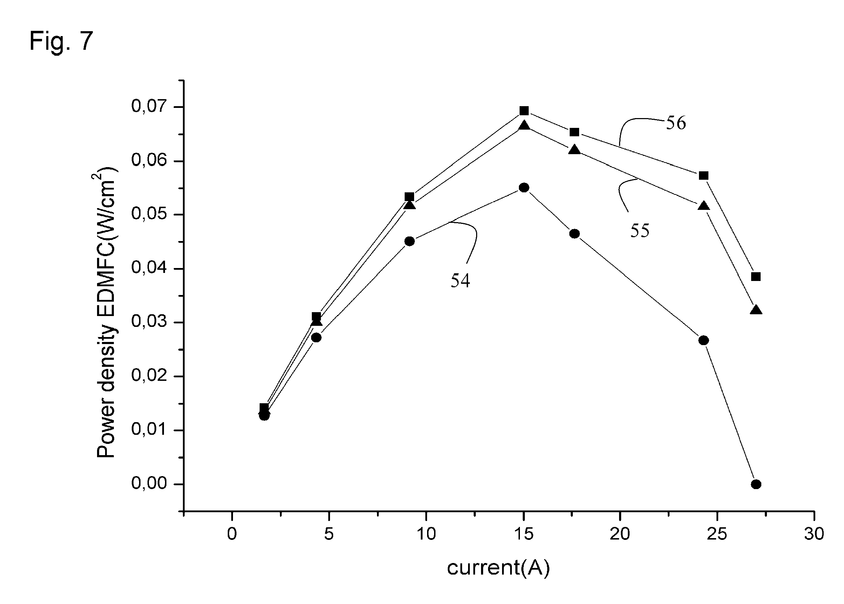

Figure 7 shows the measured power density-current-characteristic 54 together with a calculated power density-current-characteristic 55 which results from the voltage-current-characteristic 51 in Figure 6 and a power density-current-characteristic 56 which results from the voltage-current-characteristic 52 in Figure 6.

The experiment showed that the system power is heavily reduced if the hydrogen is produced in the electrolyzers 21 at a temperature of 90°C and atmospheric pressure, since the anode 37 in the fuel cell 34 is poisoned by the methanol arriving at the anode 37 of the fuel cell 34. Therefore, the hydrogen side of the electrolyzers 21 must be pressurized with an absolute pressure of 2 bar, so that the partial pressure of methanol is reduced. At an operational temperature of the electrolyzers 21 at 90°C the build-up of an additional pressure is not only necessary due to the boiling point of methanol at 64°C but also due to the energy lost by the water vapor produced at the operational temperature of 90°C. If the temperature of the electrolyzer cells is reduced the pressurization of the hydrogen side can be omitted since the partial pressure of methanol is lower at these reduced temperatures.

2. Important Aspects of the EDMFC System

2.1 Overvoltage Losses

The proposed approach uses two subunits namely the electrolyzer 21 and the fuel cell 34. Compared to the conventional DOFC 1 the EDMFC 20 comprises the additional electrodes 25 and 37, which are used for $H_2$ evolution and $H_2$ oxidation.

$$CH_3OH \, || \, O_2 \qquad\qquad DOFC$$

$$CH_3OH \, || \, H_2 \rightarrow H_2 \, || \, O_2 \qquad\qquad EDMFC$$

The additional cathode 25 and the additional anode 37 will introduce overvoltage losses, but since these overvoltage losses are caused by $H_2$ evolution and $H_2$ oxidation reactions, the overvoltage losses are very small. For example for a Gore TM MEA (0.5 mg/cm$^2$ PtRu anode, 0.5 mg/cm$^2$ Pt cathode) and for a current density of 0.8 A/cm$^2$, the overall overvoltage losses for both $H_2$ oxidation and $H_2$ evolution is below 20 mV at a temperature of 50°C. These values for the overvoltage losses have been measured in own experiments. By a simulation of the $H_2$ oxidation on Gas Diffusion Electrodes (= GDE) corresponding to the anode 37 it has been shown that the overvoltage at 0.8 A/cm$^2$ is around 10 mV. This overvoltage loss is much smaller than the overvoltage losses in DMFCs caused by methanol crossover plus cathode flooding, which could result in an overvoltage loss of more than 200 mV. Furthermore the amount of noble metal catalyst required for $H_2$ evolution and $H_2$ oxidation reactions is very small, typically below 0.4 mg/cm$^2$.

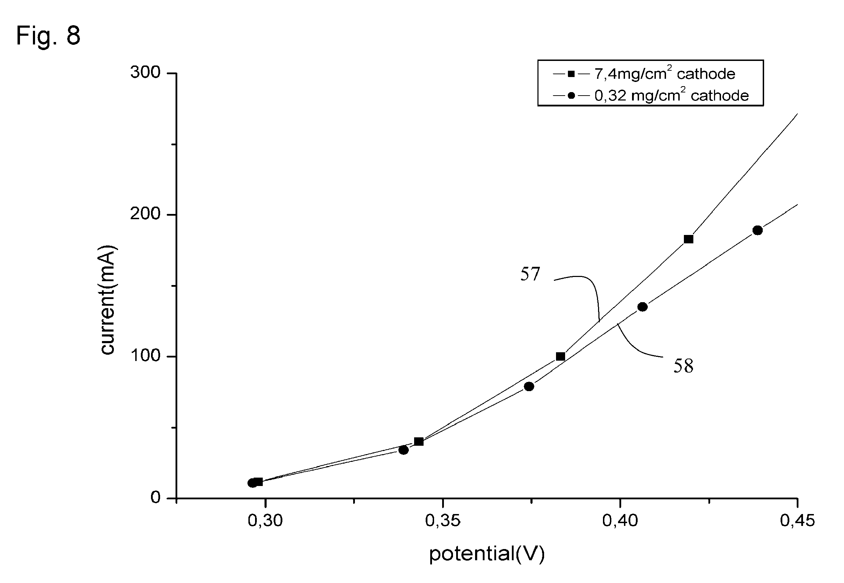

Experiments were performed to verify that increasing the cathode catalyst loading above 0.3 mg/cm$^2$ entails only a negligible further increase in the current density of the electrolyzer 21, within the relevant potential range. Figure 8 demonstrates the effect of the cathode loading on the performance of the electrolyzer 21. Figure 8 shows a voltage-current-characteristic 57 associated with a catalyst loading of 7.4 mg/cm$^2$ and a voltage-current-characteristic 58 corresponding to a catalyst loading of 0.32 mg/cm$^2$.

On the cathode side of the electrolyzer 21, hydrogen evolution takes place, which is generally a fast process. $H_2$ evolution reaction generally requires very low overvoltages for the reaction to take place and thus requires very low catalyst loadings.

The small difference between the curves shown in Figure 8 is due to of the differences in thickness of the two MEAs. The MEA with higher cathode catalyst loading is much thicker than the MEA with lower catalyst loading. Unfortunately the bipolar plates used in this experiment are designed for thicker MEAs and so when a thinner MEA was installed, it showed much higher ohmic resistance, because the Gas Diffusion Electrode (= GDE) was not in good contact with the flow field. To counter this additional Gas Diffusion Layers (= GDL) corresponding to the gas diffusion layers 27 and 30 were inserted on both sides of the MEA so that the thickness of the overall sandwich is higher and it is pressed more against the flow field when installed in the cell and thus is in good electrical contact with the bipolar plate, which serves as a current collector and provides the flow field. But introducing these additional GDLs seems to have an effect on the mass transport, which could lead to lower currents in the high potential region for the MEA with low cathode catalyst loading. Despite the problems with the thickness of the MEAs, both behave similarly at least until 0.4 V, which is appropriate potential range for EDMFC and DMFC applications.

2.2 Methanol Poisoning

In a system, similar to the EDMFC 20 some methanol vapors can escape from the gas separator 33 together with outgoing $H_2$, reaching at the fuel cell 34. The harmful effect of methanol vapors on the performance of the fuel cell 34 can be reduced by using more methanol tolerant catalysts as compared to Pt, for example PtRu, PtSn or other catalysts and catalyst alloys. Another possibility to avoid the methanol poisoning in the fuel cell 34 is by reducing the amount of methanol vapors in $H_2$, which enters the anode 37 of the fuel cell 34. This can, for example, be achieved by condensing out the methanol vapors before entering the fuel cell 34 or by reducing the partial pressure of methanol in $H_2$ by pressurization of the cathode 25 of the electrolyzer 21 or the anode and cathode side of the electrolyzer 25 as well as the separator 33. The amount of methanol vapors, which is able to leave the electrolyzer 21 together with $H_2$ will depend on the working conditions of the EDMFC 20. The anode catalyst of the MEA 22 of the fuel cell 34 should be chosen such that the amount of methanol present at the fuel cell 34 is taken into account. For example, an anode 37 with pure Pt can work well enough with small amounts of methanol vapors in the $H_2$ output of the electrolyzer separator assembly. But in case of high amounts of methanol vapor in the $H_2$ output of the electrolyzer separator assembly, more methanol tolerant catalysts, which are less poisoned by methanol must be used.

Another way to mitigate the harmful effect of methanol poisoning on the performance of the fuel cell 34 is to periodically raise the anode overpotential of the fuel cell 34 to such a potential value at which adsorbed methanol or molecules of any other organic fuel are oxidatively removed from catalyst surface. This potential value typically depends on the working conditions, for example temperature, nature of anode catalyst and other parameters. For example for PtRu catalyst this potential value can be in the range between 0.8 V and 0.1 V. Raising the anode overpotential can be achieved by periodically lowering voltage of the fuel cell 34.

Periodically lowering the voltages of the fuel cell 34 results in reduced efficiency and higher $H_2$ consumption. To avoid this $H_2$ fuel loss, one can fuel starve the fuel cell 34 before applying the potential pulse to lower potentials. This would result in reduced consumption of $H_2$ during the low voltage pulse and thus raise the system fuel efficiency.

Air bleeding is another approach to reduce the harmful effect of methanol poisoning. This approach involves injecting small amount of air into the anode 37 of the fuel cell 34 along with $H_2$.

2.3 The Electronic Control Unit

The distribution of power between the electrolyzer 21 and load 46 is controlled by the Electronic Control Unit (= ECU) 45. The ECU 45 can consist of voltage regulators or DC-DC step-down or step-up converters, which are generally up to 98% efficient. The ECU 45 controls the voltage efficiency of the EDMFC 20 by controlling the voltages of operation of the electrolyzer 21 and the fuel cell 37. The ECU 45 supplies electric power at appropriate voltage to the electric load 46. All other active components of the EDMFC 20 like pumps, air blowers, pressure and temperature sensors, valves and other devices are also controlled and powered by the ECU 45.

2.4 Passive Pressure Regulation

The pressure is self-generated in the electrolyzer 21 by the gases formed at the anode 24 ($CO_2$) and cathode 25 ($H_2$). At higher temperatures, it is required to work at elevated pressures to increase the boiling point of the methanol-water solution. So the pressure in the electrolyzer 21 is preferably maintained and regulated by passive mechanical pressure regulating valves. High pressure in the electrolyzer 21 is also required for limiting the vaporization of methanol on the side of the anode 24 and cathode 25 of the electrolyzer 21.

2.5 Gas-Liquid Separation

The $H_2$ produced at the cathode 25 of the electrolyzer 21 is separated from crossed-over methanol and water by the separator 33. The separator 33 can be orientation dependent or orientation independent, as disclosed in US 68 69 716 B2.

2.6 Dead End Operation of the Fuel Cell

In order to reach high fuel efficiencies the fuel cell 34 can be operated in dead end mode instead of overstoichiometric flow mode. In this case the produced $H_2$ is consumed completely by the fuel cell 34. The state of the art MEAs 35 manufactured by Gore TM, for instance, are able to operate in dead end mode at anode 37. Conventional fuel cells operating with $H_2$ supplied by metal hydride tanks ($H_2$ storage) or from other pure hydrogen source operate already in dead end mode.

3. Advantages

3.1 Methanol Crossover

The problem of methanol crossover of conventional DMFCs is avoided, which will save up to 40% methanol fuel and thus result in better overall energy density of the system. The EDMFC 20 avoids the problem of methanol crossover as the $H_2$ gas from the cathode 25 of the electrolyzer 21 can be separated from the liquid methanol using condenser or liquid - gas separator assemblies. The separated methanol is then fed back to the anode 24 of the electrolyzer 21 and thus methanol (or fuel) utilization of nearly 100% can be reached. No fuel will be lost in the EDMFC 20 due to crossover. But some fuel will be lost on both side of the electrolyzer 21 due to vaporization. Also the electrochemical effect of a mixed potential at the cathode side caused by crossed-over methanol as it is the case in conventional DMFC will be overcome as well.

### 3.2 Cathode Flooding

The problem of cathode flooding due to liquid crossover is also avoided in the EDMFC 20, as the oxygen reduction reaction takes place at the separate MEA 35 in a complete gas phase as on the cathode side of a conventional PEMFC. The EDMFC scheme overcomes the cathode performance problems in DMFCs related to the cathode flooding by the crossed-over liquids (water + methanol) through the PEM permeable for liquids. In a conventional DMFC the liquids flood the cathode and thus disrupt the diffusion of oxygen to the catalyst layer, creating a mass transport barrier. In the EDMFC 20 methanol oxidation and oxygen reduction takes place in different cells, namely in the electrolyzer 21 and the fuel cell 34 respectively. The separator 33 separates the $H_2$ from gas-liquids mixture and the purified $H_2$ is then fed to the fuel cell 34. So the fuel cell 34 operates in complete gas phase. Thus the cathode 37 of the EDMFC 20 performs similarly as the cathode of a conventional PEMFC.

### 3.3 Cathode Pressure and Airflow Stoichiometry

In comparison to conventional DMFCs the EDMFC 20 requires no pressurized operation of the cathode 38 and no high flow stoichiometry. An airflow typical of a conventional PEMFC is sufficient. This simplifies the complexity of the system. In addition the electrical energy required for compressors and blowers operating at elevated pressures can be saved. The power requirement for the compressors can constitute a significant portion of up to 22% of the DMFC output depending on the pressure and air flow stoichiometry of cathode operation. Furthermore, these ancillary units have considerably increased the complexity of conventional DMFCs.

### 3.4 Heat Losses and Thermal Management

In conventional DMFCs, operation at higher temperatures causes difficulties due to the excessive water vaporization resulting in heat loss and causes a reduced cathode performance due to a reduced partial pressure of oxygen. These effects necessitate an elevated pressure at the cathode side. To achieve the elevated pressure the use of compressors is required. The heat loss due to water vaporization makes it difficult to operate the DMFC autonomously at elevated temperatures at which the electrode kinetics would improve significantly. The EDMFC 20 does not suffer from these drawbacks, since the liquid phase anodic reaction takes place in the electrolyzer 21, and gas phase $H_2/O_2$ electrochemical reaction takes place in the fuel cell 34. The electrolyzer 21 and the fuel cell 34 are physically separated by the separator 33 and thus water is not available in liquid form in the cathode 37 of the fuel cell 34, unlike the conventional DMFC where the water is present excessively at the cathode and where water is also vaporized leading to heat losses. But the electrolyzer 21 where the liquid phase methanol oxidation reaction takes place can be operated autonomously at high temperatures as the outgoing gas flows of the electrolyzer 21 ($CO_2$ and $H_2$) are very small compared to the air flow of a conventional DMFC (air flow with 80% $N_2$) and therefore can be controlled more easily. The temperature of the electrolyzer 21 is only limited by the maximum operation temperature of the electrolyte. Operating the electrolyzer 21 at higher temperatures requires overpressure. The pressure in the electrolyzer 21 in the EDMFC 20 is self-generated by the produced $H_2$ and $CO_2$ in the electrolyzer 21 but in conventional DMFC it has to be created by using compressors. The pressure in the electrolyzer 21 can be adjusted by passive pressure regulating valves.

### 3.5 Cathode Catalyst Loading

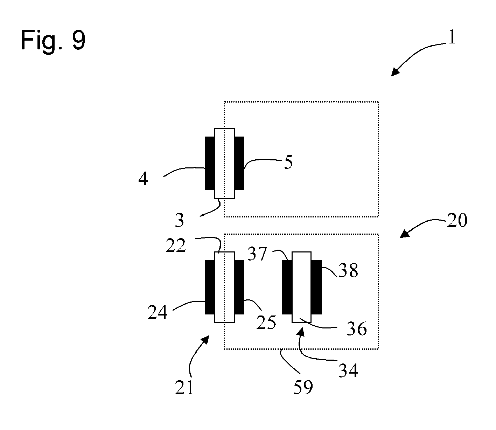

Since two additional electrodes for $H_2$ evolution in the electrolyzer 21 and for $H_2$ oxidation in the fuel cell 34 are present, an effective cathode 59 in the EDMFC 20 is composed of these two additional electrodes and additionally the oxygen reduction electrode 38 in the fuel cell 34, as illustrated in Figure 9.

Due to the absence of methanol crossover and cathode flooding, the resulting effective catalyst loading required on the cathode side of the EDMFC 20 can be considerably lower than the catalyst loading of a conventional DMFC cathode. In the EDMFC 20 the anode (liquid phase) and the cathode (gas phase) processes are physically separated. Due to the separation the effective cathode 59 of the EDMFC 20 performs similarly as the cathode of a conventional PEMFC. In a conventional PEMFC the cathode performance is much higher than the cathode performance in a DMFC even though the DMFC typically uses considerably higher catalyst loadings than the PEMFC and drastic cathode operating conditions. The DMFC needs higher catalyst loadings and drastic operating conditions, for instance higher flows and elevated pressures to partially compensate for the harmful effects of methanol and water crossover and resulting flooding of the electrode. In the EDMFC 20 these effects no longer affect the performance of the effective cathode 59. So the catalyst loading required for the effective cathode 59 can be considerably lower than in a DMFC.

3.6 Anode Catalyst Loading

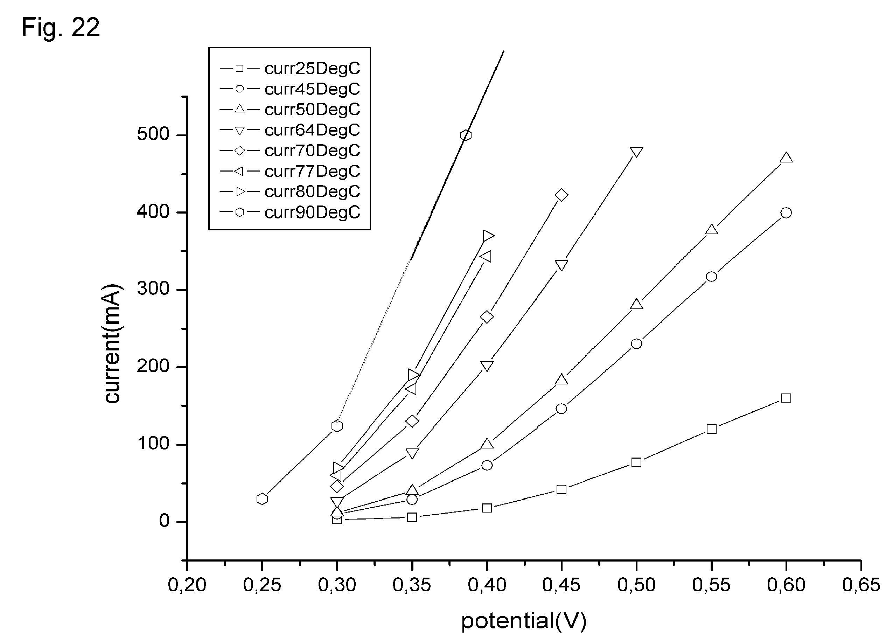

In the electrolyzer 21 of the EDMFC 20, autonomous high temperature operation is possible because of lower heat losses and pressure self-generated by the gases $CO_2$ and $H_2$. This enables easy high temperature operation of the electrolyzer 21, which allows to lower the anode catalyst loading, as the kinetics of methanol oxidation is considerably better at high temperatures, as will be explained in detail based on Figure 22. For example the current density of the electrolyzer 21 is 5-6 times higher in the temperature range 80-90 °C than in the 50-60 °C temperature range. For this specific example there is the possibility of reducing the anode catalyst loading in the electrolyzer 21 by a factor between five and six, in comparison to a DMFC. Further increase in operation temperature of the electrolyzer 21 would result in even higher current per gram of catalyst. Better kinetics of fuel oxidation, for instance methanol oxidation, at higher operational temperatures of the electrolyzer 21 might also enable the usage of nonnoble metal catalysts. Higher current densities at higher temperature in the electrolyzer 21 would also result in higher power density of the EDMFC system.

3.7 System Design

The fuel cell 34 can be optimized by choosing optimized working conditions for the electrolyzer 21 and the fuel cell 34 independently. For example, the thermodynamic efficiency of the system can be optimized by choosing independently the operating voltages of the electrolyzer 21 and the fuel cell 34. In particular, the volumetric power density, the gravimetric power density (W/kg) and the costs can be optimized by choosing the right operating temperature and catalyst loading of the electrolyzer 21 and the fuel cell 34. The physically separated electrolyzer 21 and fuel cell 34 provides an opportunity to optimize different parameters independent of each other. For example, the working temperatures can be chosen independently for the electrolyzer 21 and the fuel cell 34 according to their life spans, according to heat management aspects of the EDMFC system or according to operational requirements of the system components. Furthermore, especially for portable applications the required surface temperature of the fuel cell system which should be lower than 50°C can be much more easily achieved. In a DMFC the heat loss is much higher compared with a PEMFC caused by much higher stoichiometric air flow and heat losses by vaporized crossed over water which has to be cooled down before it exits the system. Thus the heat exchanger area in an EDMFC system will be much smaller.
In order to reach required surface temperatures in the EDMFC system, the working temperature of the fuel cell 34 can additionally be lowered. At the same time the electrolyzer 21 can perform at higher temperature. The impact of higher temperatures of the electrolyzer 21 on the surface temperature of the system can easily be reduced by using thermal insulators. By contrast, reducing the working temperature in a conventional DMFC system would reduce the electrical power output of the system much stronger compared to the reduced power output in the EDMFC 20 caused by lower operational temperatures of the fuel cell 34. Thus the EDMFC scheme allows more flexibility in designing application specific fuel cell systems compared to DMFC.

3.8 Compact Electrolyzer Design

The electrolyzer 21 for the EDMFC 20 where the anodic reaction of methanol oxidation takes place, can be designed very compact. Thus higher volumetric energy densities for the system can be achieved.

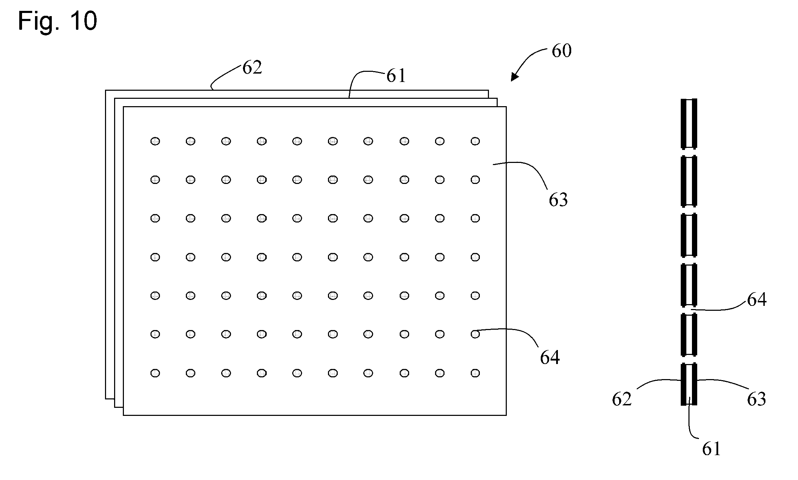

Figure 10 shows a porous MEA stack 60, comprising an electrolyte membrane 61 with catalyst loaded gas diffusion layers 62 and 63 on both sides. The MEA stack 60 in Figure 10 contains only a single membrane electrode assembly. But additional electrolyte membranes 61 and gas diffusion layers 62 and 63 can be added to the stack depicted in Figure 6. The result is a MEA stack for the electrolyzer 21.
In the porous MEA stack 60 for the electrolyzer 21 methanol is not supplied through a flow field, but diffuses passively through holes 64 or pores in the MEA stack 60 to the catalyst layers, when the porous MEA stack 60 is immersed in a methanol solution. In liquid phase the mixing of $H_2$ and $CO_2$ in methanol solution does not create any problem as the solubility of $H_2$ in water is very small, which reduces the reoxidation current of $H_2$ at the anode. Furthermore the anode GDL and catalyst layer can be made hydrophilic and cathode GDL and catalyst layer can be made hydrophobic for helping to reduce reoxidation current of H2 at anode. The stack 60 may have anode (A) and cathode (C) arranged in an alternating way like ACACACACAC. Apart from this a parallel stack arrangement can also be chosen which has the anode (A) and cathode(C) arranged like ACCAACCAACCAAC. This can avoid direct contact of $H_2$ bubbles to the anode of the next electrolyzing unit in the porous MEA stack 60, but would require parallel voltage connection. The final gas output of the electrolyzer 21 would be a mixture of $CO_2$ and $H_2$ which is fed to the anode 37 of the fuel cell 34. This approach will help in achieving very small cell pitch, as no bipolar plate with flow field is required. A small steal grid or some other porous conducting layer can be used as a current collector. Such an approach would be especially beneficial for miniaturizing fuel cell based power supplies. In order to get an orientation independent gas supply from this electrolyzer type additional gas liquid separators have to be installed at various faces of the electrolyzer 21 compared to a flowfield design.

### 3.9 Power recovery

The methanol oxidation reaction produces $CO_2$ on the anode side and $H_2$ on the cathode side, which generates pressure. This self generated pressure and the gasflows can be used for passive pumping of fluids in an EDMFC system or to recover the energy in form of electrical energy by using suitable conversion devices. Concepts for such devices are disclosed in US 2003/0095872 A1.

### 3.10 Electrolyzer Working with Various Electrolytes

Because of the physical separation of anodic and cathodic processes in the EDMFC 20 the electrolyzer 21 can work with other electrolytes than the fuel cell 34, for example acidic or alkaline, high temperature or low temperature electrolytes. In a conventional DMFC flexibility in choosing different anode and cathode electrolytes and operations at different temperatures of anode and cathode are not available.

### Solid High Temperature Electrolyte

Use of electrolytes which can work at temperatures up to 180-200 °C, for example composite Nafion membrane, composite sulfonated polyetheretherketone (sPEEK)-ZrP membranes, PBI based electrolyte membranes, would result in considerable noble metal catalyst savings.

### Electrolyzer Based on Liquid Electrolytes

Other types of electrolytes which could also contribute towards system miniaturization can be liquid electrolytes. Because the cathode side of the electrolyzer 21 performs also in liquid phase, one can use micro/nano porous electrical insulating matrices as separator between anode 24 and cathode 25 which are filled with liquid electrolyte like sulfuric acid, triflic acid, phosphoric acid and other materials. This allows the electrolyzer 21 to perform at high temperatures above 120°C, where Nafion can no longer be used. Since the kinetics improves at higher temperatures, it would be possible to save significant amounts of catalyst due to the operation at higher temperatures. The output of this kind of electrolyzer 21 can be separated gases as from electrolyzers with bipolar plate stack architecture or a mixture of $CO_2$ and $H_2$. Electrolyzer design with mixed gas output provides a potential for miniaturizing the electrolyzer 21 and thus contributes to miniaturize the overall EDMFC system.

### Polymer Alkaline Membranes

Alkaline media offers better kinetics for major fuel cell processes. Progress in solid polymer alkaline membranes would make it easier to use them in fuel cells. EDMFC can also utilize the advantage of better kinetics by using these membranes in the electrolyzer 21. This can result in lower overvoltage losses in anodic processes of the electrolyzers 21.

### 3.11 Electrolyzer with Mixed Output

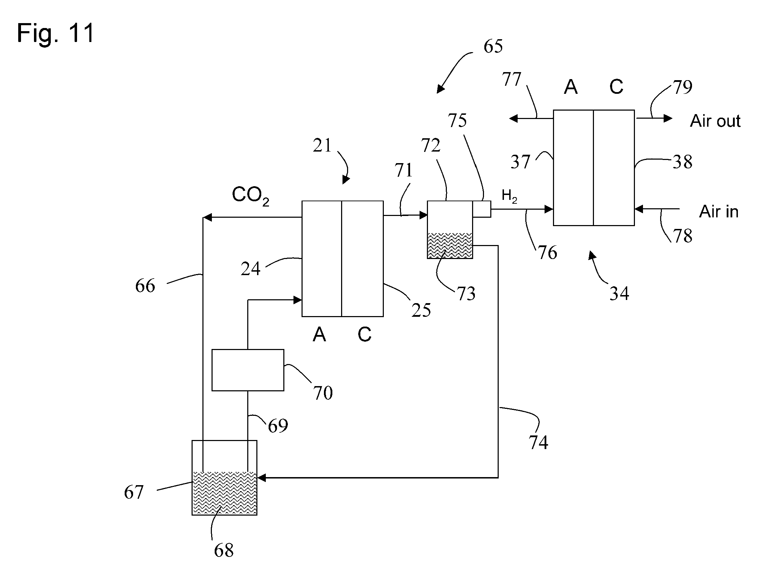

The electrolyzer 21 can be used in separated flow mode or mixed flow mode. Figure 11 to 13 show different configurations of an EDMFC system. Each could be chosen according to a particular requirement for any EDMFC system. Separated flow electrolyzer 21 represent the case when the anodic and cathodic flows go to separate condenser/gas-liquid separators. In this case the $H_2$ output of cathode of the electrolyzer 21 is fed to the fuel cell 34.

Figure 11 shows a block diagram of an EDMFC 65 with a separated flow. In the EDMFC 65 the anode 24 of the electrolyzer 21 is connected to a conduit 66 conducting the $CO_2$ produced in the anode 24 to a fuel tank 67 containing fuel 68, which is a mixture of methanol and water. The fuel 68 can be conducted back to the electrolyzer using a conduit 69 and a fuel pump 70. The cathode 25 of the electrolyzer 21 is further connected to a conduit 71, which leads to a condenser 72. The condensate 73 is fed back into the fuel tank 67 via a conduit 74. The hydrogen passes through a pressure regulating valve 75 and arrives at the anode 37 of the fuel cell 34 through conduit 76. The hydrogen, which is not used in the anode 37 can leave the anode of the fuel cell 34 by a conduit 77. For the sake of completeness it should be mentioned, that air is supplied to the cathode 38 of the fuel cell 34 via a conduit 78 and the remaining air together with the water produced in the fuel cell 34 can leave the fuel cell 34 through a conduit 79.

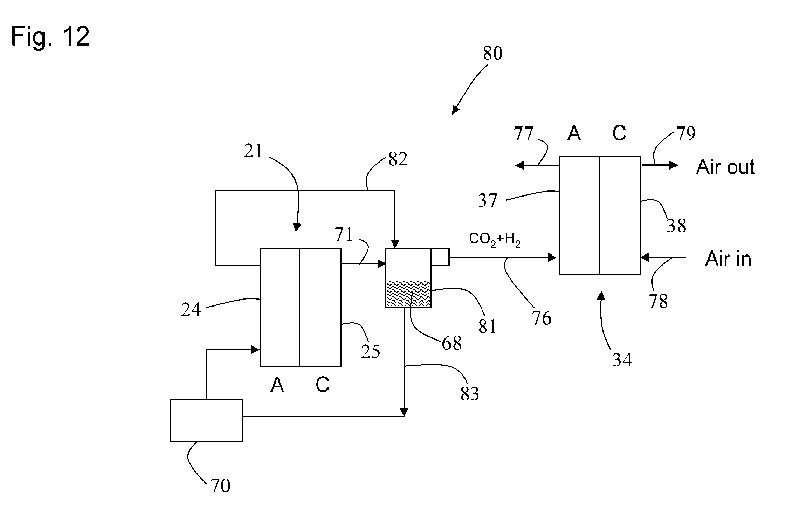

Figure 12 shows a block diagram of an EDMFC 80 with a combined flow of hydrogen and $CO_2$. In the embodiment of Figure 12 the $CO_2$ produced in the anode 24 is conducted to a condensating fuel tank 81 by an conduit 82. The fuel tank 81 is also connected to cathode 25 of the electrolyzer 21 via conduit 71. The fuel 68 within the fuel tank 81 is fed back into the anode 24 through conduit 83 which is provided with the fuel pump 70. $H_2$ and $CO_2$ can pass through valve 75 and conduit 76 and reach the anode 37 of the fuel cell 34.

In mixed flow electrolyzer 21 anodic and cathodic flows are fed to a common condenser/gas-liquid separator tank. The output of the electrolyzer 21 typically consists of $H_2$ (75%) and $CO_2$ (25%). The mixed flow electrolyzer 21 allows to eliminate one condenser/gas-liquid separator tank, which could be very useful for designing compact EDMFC systems.

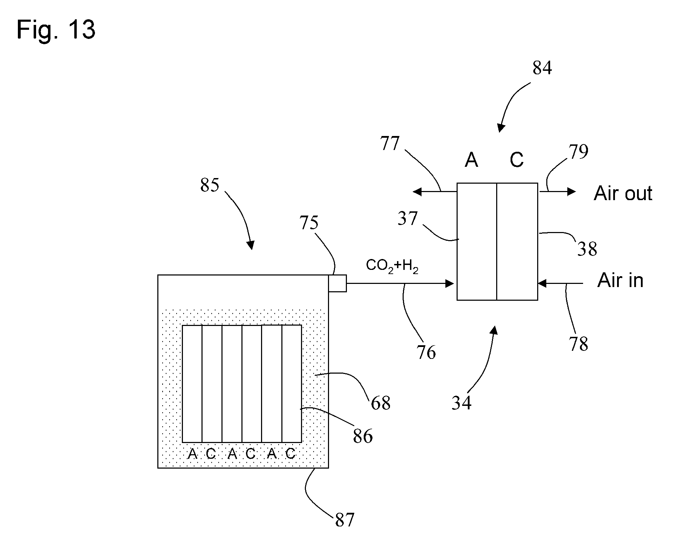

Figure 13 shows a mixed flow EDMFC 84 with a modified electrolyzer 85. In this electrolyzer 85 an electrolyzer stack 86 is kept in a fuel tank 87 and the fuel 68 can diffuse passively or can be pumped into the anodes of the individual cells of the electrolyzer stack 86. But the liquids from the anode and cathode side of the electrolyzer stack 86 remain in the fuel tank 87. Only gases ($CO_2 + H_2$) leave the fuel tank 87 via the valve 75 and conduit 76. For orientation independence a gas-liquid separator membrane can be used with several outlets disposed on different sides of the fuel tank 87.

3.12 Pulsing the Electrolyzer to Lower Potentials

Continuous polarization of the electrolyzer 21 or 85 at a certain potential for extended periods of time might result in faster degradation rates of anode catalyst activity. Periodical pulsing of anode catalyst to lower potentials helps in partially regenerating the activity of the catalyst. So the operation of the electrolyzer 21 or 85 with periodical short pulses to lower potentials, for instance 0 V or even <0 V might slow down the degradation in catalyst activity.

4. Electronic Circuit and Power Management in EDMFC

4.1 Simplified Electronic Circuit

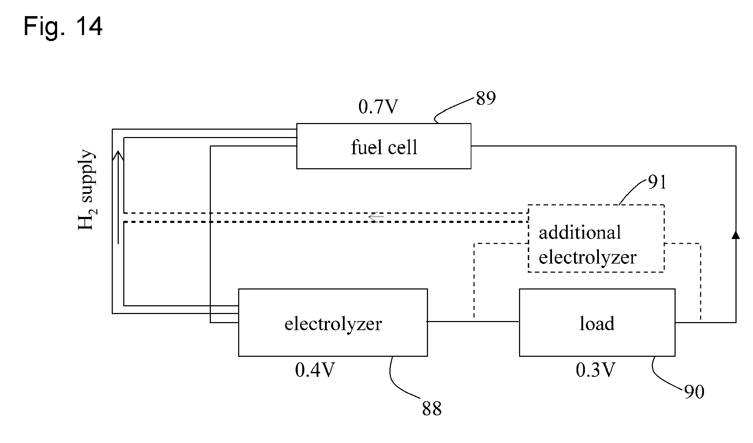

Figure 14 illustrates in a simplified way how the voltage and current can be distributed between the main components of the EDMFCs 20, 65, 80 and 84, namely an electrolyzer 88, fuel cell 89 and load 90, in an ideal case of no hydrogen loss in the system. For example if hydrogen is being produced by a electrolyzer 88 at 0.4 V (a typical anode over voltage for a conventional DMFC) with a current I, and if the current I is fed in the fuel cell 89 running in dead end mode at 0.7 V, which is a typical cell potential for PEMFC, 0.3 V * I remain as power output. The voltages at which the electrolyzer 88 and fuel cell 89 are operated, determines the overall voltage efficiency of the EDMFC system.

In a non ideal case of some $H_2$ loss in the system, the simplified circuit has to be designed differently.

Figure 14 also shows an EDMFC simplified series electronic circuit in a practical case with $H_2$ loss. An additional electrolyzer 91 compensates for the $H_2$ loss in the system and thus makes sure that this series circuit runs properly. Single lines depict the electrical wire and double lines depict the conduits and pipes for the $H_2$ flow.

In a practical system, the $H_2$ losses in the pipes connecting the electrolyzer 88 and the fuel cell 89 and in the $H_2$/air flowfield of the fuel cell 89 will result in non-functioning of the simplified series electronic circuit without the components depicted in dashed lines. But if an additional appropriate size electrolyzer 88 designed to produce $H_2$ equivalent to $H_2$ losses in the system is connected in parallel to the fuel cell 89 or load 90, then this series circuit can work. Furthermore this circuit can regulate the potential of the fuel cell 89 and the electrolyzer 88 according to the power demand of the load 90. But generally the series electronic circuit will work as long as the $H_2$ losses are compensated. This means that the $H_2$ loss compensating electrolyzer 91 do not necessarily need to be connected to the main circuit. For example it could be powered by a regulated voltage from a ECU, which can assess $H_2$ loss in real time and accordingly give just enough power to the loss compensating electrolyzer 91 to produce the required $H_2$. Finally this circuit will help in eliminating the requirement of lossy DC-DC converters, which might be otherwise needed to supply the regulated voltages to electrolyzer 88.

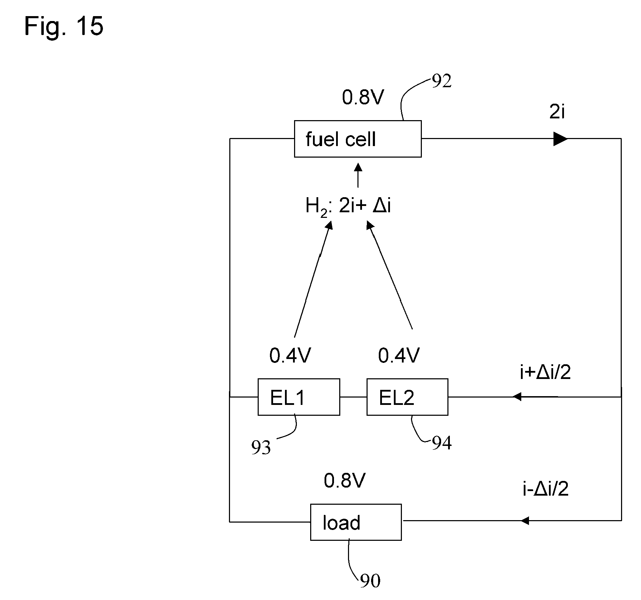

Figure 15 shows an alternative circuit for power distribution. Figure 15 shows a circuit where a fuel cell 92, two electrolyzer cells 93 and 94, also marked EL1 and EL2, and an electric load 90 with appropriate current voltage characteristics are connected in parallel. Now for example if there is a loss of $H_2$, equivalent to $\Delta i$, in the system, then one can adjust the electrical operational points of the electrolyzer cells 93 and 94 and the load 90, in such a way that the current is distributed as shown in Figure 15. This ensures that the electrolyzer cells 93 and 94 produces $H_2$ equivalent to $2i + \Delta i$ and the electrical current in the circuit is 2i. The $H_2$ equivalent to $\Delta i$ is lost in the system. This $\Delta i$ can be any value depending on the system. But for an efficient system it has to be minimized.

The two simplified circuit designs suggested in this section are meant only to illustrate the distribution of current and potential in an EDMFC system, which is generally controlled by the electronic control unit 45.

The EDMFCs 20, 65, 80 and 84 including air blowers, pumps or other electrical components, can also be designed without the ECU 45 by just connecting the components and the electric load in appropriate combinations of serial and parallel circuits.

4.2 EDMFC with Various Electronic Circuits and $H_2$ Supply Configurations

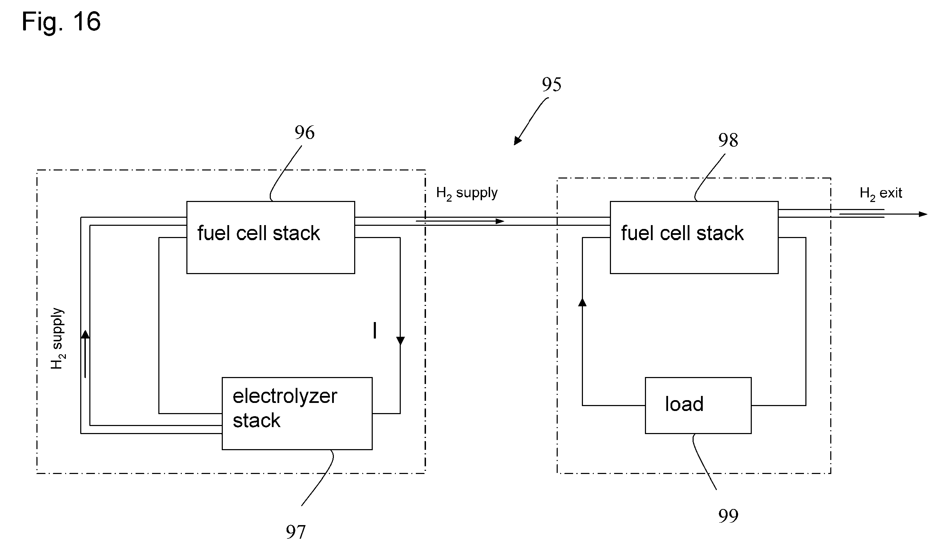

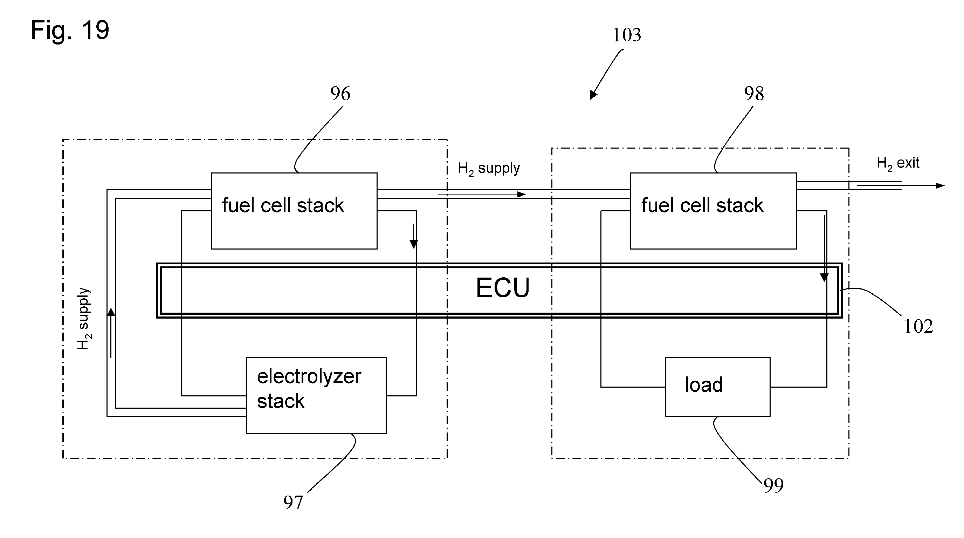

As depicted in Figure 16, an EDMFC can also be designed such, that there is a fuel cell or a fuel cell stack 96 connected with an electrolyzer stack 97. The working points of the electrolyzer stack 97 and fuel cell stack 96 with appropriate electronic circuit can be chosen in a way that more $H_2$ is produced in the electrolyzer stack 97 than is consumed in the fuel cell stack 96. The excess of $H_2$ is then fed to another fuel cell or fuel cell stack 98. The power produced in this fuel cell stack 98 can be supplied to an external electric load 99. In this case, the circuit of the fuel cell stack 96 with the electrolyzer stack 97 acts as self powered hydrogen generator. By choosing an appropriate number of cells in the fuel cell stack 96 and in the electrolyzer stack 97 and by choosing an appropriate active area of each cell as well as suitable properties of the MEAs and suitable operating conditions, the working points of the electrolyzer stack 97 and fuel cell stack 96 can be matched to produce excess of hydrogen. The excess of hydrogen is then fed to the other fuel cell stack 98 to power the external load 99. This circuit can run without any additional regulation, in particular without using the ECU 45. This will spare energy losses in the ECU 45 and can reduce the costs of the EDMFC system.
Figure 16 shows a scheme where the left block composed of the fuel cell stack 96 and the electrolyzer stack 97 works as a hydrogen generator and the right block is used to consume the $H_2$ thus produced to generate electric power for the electric load 99. The electrical connections are shown as single solid line and the $H_2$ gas flows conduits are shown by tubes. Figure 16 depicts a way of $H_2$ distribution, in which the two fuel cell stacks 96 and 98 are connected in series with respect to the $H_2$ gas flow.

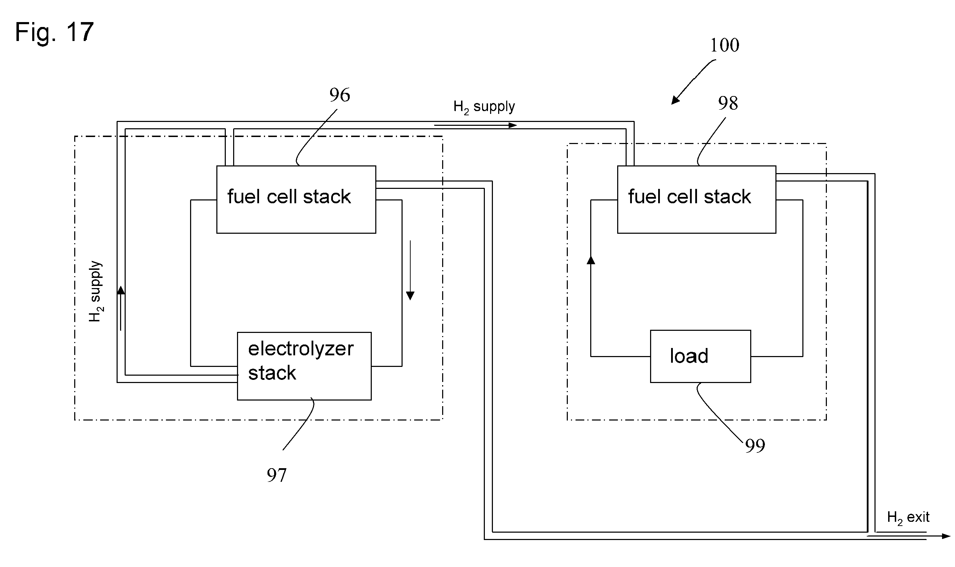

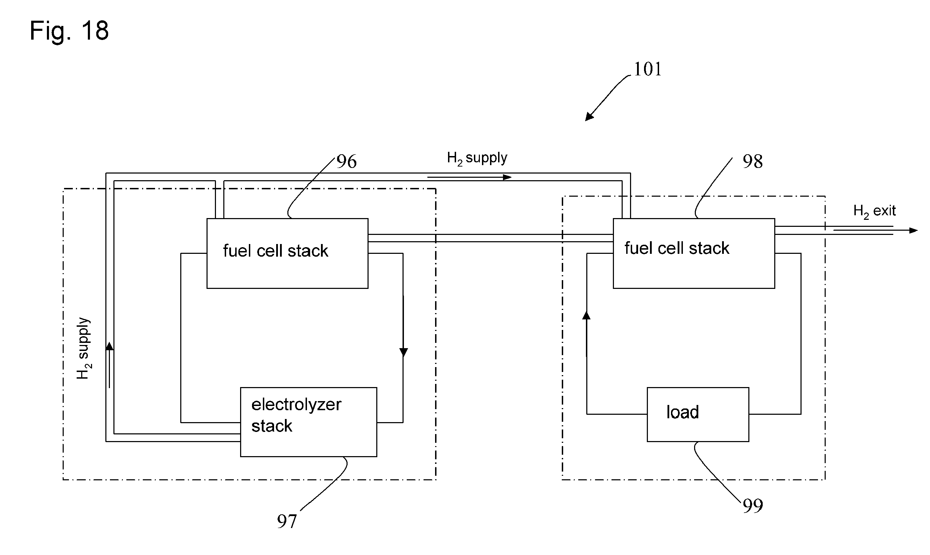

Figure 17 shows a EDMFC 100 with a parallel distribution of $H_2$ from the electrolyzer stack 97 to the two fuel cell stacks 96 and 98. In the case of a parallel distribution of $H_2$ the $H_2$ output of the first fuel cell stack 96 may contain some unutilized $H_2$. Figure 18 shows a EDMFC 101 with a parallel $H_2$ flow scheme with the output of the first fuel cell stack 96 inserted into the second fuel cell stack 98.
In equilibrium conditions when the electrical characteristics of all components, in particular fuel cell stack 96 and 98, electrolyzer stack 97 and load 99 are fixed, the EDMFCs 95, 100 and 101 based on the circuits and $H_2$ flow configurations described in this section can work without any regulation by the ECU 45. But in case of changing power requirement of the electric load 99 or any other changes in electrical characteristics of the fuel cell stacks 96 and 98 as well as electrolyzer stack 97, an active regulation by an ECU 102 will be needed for a EDMFC 103, as depicted in Figure 19.

4.3 Scheme of Electrical Power Management in EDMFC

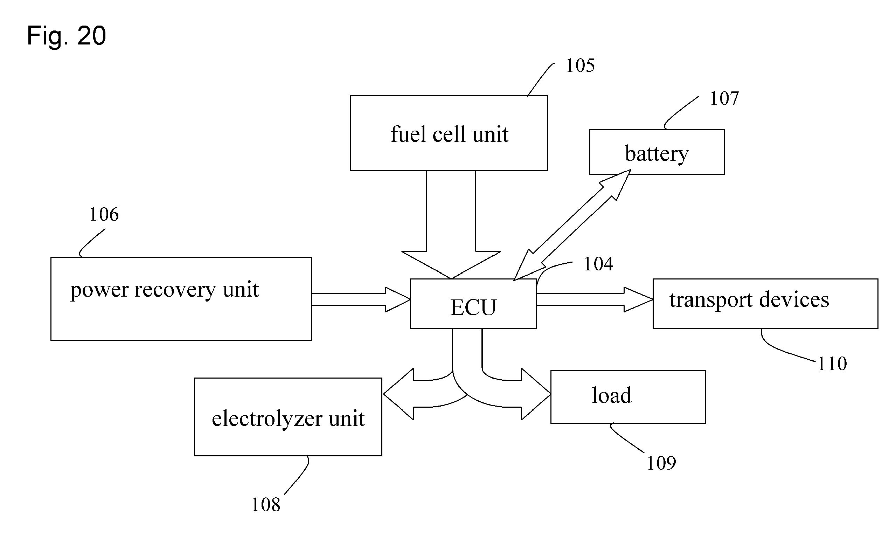

Figure 20 shows a schematic view of the power distribution in an EDMFC-system. For real time power management one may require proper voltage and power regulation units like an ECU 104 to run the system.
According to Figure 20 the ECU 104 is supplied with power from a fuel cell unit 105, which might be a single or a plurality of fuel cell stacks. The ECU 104 receives also power from a power recovery unit 106, which recovers power from pressurized gases. A battery 107 might be used for energy storage. The energy received by the ECU 104 is distributed among an electrolyzer unit 108, a load 109 and a number of ancillary units 110 such as pumps and blowers.

5. EDMFC System Design

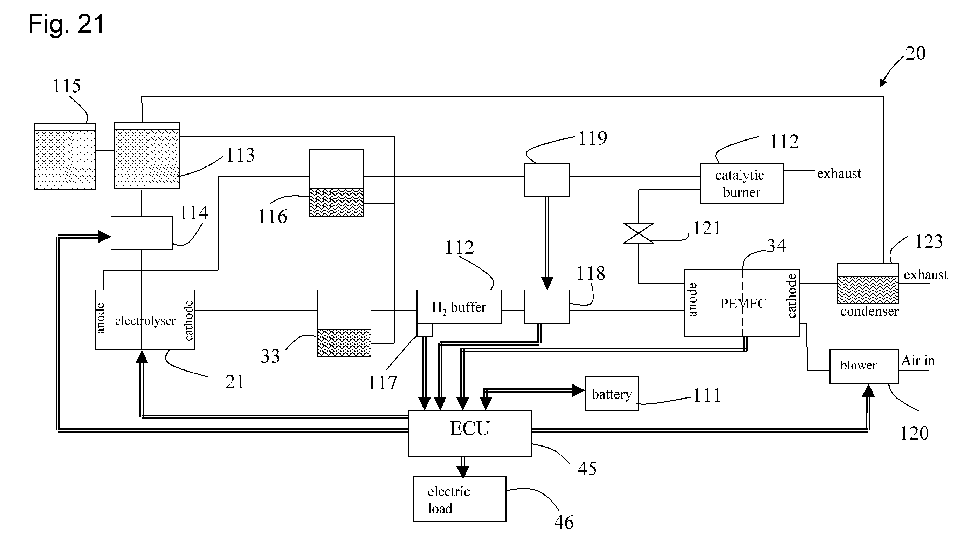

In Figure 21 the EDMFC 20 is shown in more detail.
To start up the system the ECU 45 has to supply the electrolyzer 21 with electrical power from a battery 111 or ultra capacitor or any other electrical energy source. Alternatively a $H_2$ buffer tank 112 can also help in starting the whole system by supplying the stored $H_2$ to the fuel cell 34. The EDMFC 20 can also be designed such, that the fuel cell 34 is fed by a mixed $H_2$ and $CO_2$ output of the electrolyzer 21. The EDMFC 20 can also be designed such that the EDMFC 20 can be switched between mixed and separated flow operation.
The methanol water mixture from a fuel tank 113 is delivered by a fuel pump 114 to the electrolyzer 21. The methanol in the fuel tank 113 is provided by a fuel reservoir 115. In the presence of methanol and by applying a certain voltage at the electrolyzer 21 the methanol will be oxidized to $H_2$ and $CO_2$. The $H_2$ will be produced at the cathode side, the $CO_2$ at the anode side of the electrolyzer 21 (equations 3 and 4). The higher the applied voltage at the electrolyzer 21, the higher is the current density and the $H_2$ production increases correspondingly. The maximum voltage will be limited in case of using Ru containing catalyst to approximately 0.8 V in order to avoid Ru-oxides formation. To achieve reasonable currents and system efficiencies the voltage applied to the electrolyzer 21 should be between 0.3 V and 0.5 V but the voltage can also exceed these limits. The humid $CO_2$ and $H_2$ gas which exit the electrolyzer 21 will be separated from liquid water or water methanol mixtures in the gas liquid separator 33 and 116. The separated liquids will be conducted back to the fuel tank 113 by pumps or by using passive pumping system driven by the self generated pressure. The $H_2$ buffer tank 112 can be filled up to a certain pressure. By using a pressure sensor 117 together with the ECU 45

the $H_2$ production in the electrolyzer 21 can be controlled. The $H_2$ buffer tank 112 will help in smoothening out fluctuations in the performance of the electrolyzer 21 and fuel cell 34. The $H_2$ buffer tank 112 could also be used as a source of $H_2$ for starting up the EDMFC system.

Then the $H_2$ passes a power recovery module 118 which can recover the energy of the compressed gas. The recovered energy can be converted to electrical energy or can be used as mechanical energy. For example, the recovered energy might be directly used to run blowers for producing the air flow on the cathode side of the fuel cell 34. On the $CO_2$ side energy recovery can be done in the same way using a power recovery module 119. In case of an electrical energy conversion the recovered electrical power is fed to the ECU 45 which will distribute it to the system components and the load 46.

The $H_2$ enters then the fuel cell 34 together with the air or oxygen that enters the cathode side of the fuel cell 34 by self diffusion or is supplied via blowers 120 into the cathode. $H_2$ and $O_2$ will react to water producing electrical power. The fuel cell 34 can be run in dead end mode on the $H_2$ side. To achieve a better dead end performance one need a valve 121 at the outlet of the anode 37 which opens from time to time in order to purge the anode 37 from gases other than $H_2$. The outgoing $H_2$ gas is inserted into a catalytic burner 122 before being released into the environment. After passing the power recovery module 119, the $CO_2$ gas which carries methanol vapors will also be inserted into the catalytic burner 122 in order to oxidize the methanol before exiting the system.

The catalytic burner can be replaced by an electrochemical membrane electrode assembly (MEA) which can oxidize $H_2$ and methanol in the outgoing exhaust gases at its anode and thus $H_2$ produced at the cathode of the MEA can be recycled back to the fuel cell. This MEA would require electrical power from the ECU, but would help in recycling the outgoing fuel, for example $H_2$ and methanol vapours. Another option for cleaning the exhaust gases from $H_2$ and methanol vapours is to conduct the exhaust gases through a fuel cell running at short circuit or a low cell voltage.

The exhaust gas from the cathode side of the fuel cell 34 can finally be inserted into a condenser 123. The condensed water can be recovered and inserted back to the fuel tank 113 in order to achieve the desired methanol dilution. By recovering the produced water the system can run without adding additional water to the system.

The electrical power produced by the fuel cell 34 is higher then the electrical power needed in the electrolyzer 21 for producing the desired $H_2$. For example, when the fuel cell 34 runs at 0.7 Volt and the electrolyzer 21 at 0.4 Volt, then an electrical power of 0.3 * I can be consumed in the electric load 46 (Figure 14). The electrical power distribution between fuel cell 34, electrolyzer 21, electric load 46, battery 111, pumps 114, blowers 120, sensors 117 and valve 121 will be controlled by the ECU 45. Furthermore, the regulations of temperature, pressure, flow, concentration of methanol-water mixture can also be controlled by ECU 45. By means of the ECU 45 the voltage of the fuel cell 34 and the electrolyzer 21 can be chosen independently. Thus the efficiency can be adjusted. A loss of $H_2$ in the system in dead end or continuous flow mode requires that the ECU 45 compensates the lost hydrogen by supplying additional electrical power to the electrolyzer 21. These losses will reduce the overall power output of the system.

The EDMFC system design described in this section is only one example for realizing the EDMFC 20. There can be many other ways of designing an EDMFC system.

In particular, an EDMFC system can also be designed with no or very few system components. For example, an EDMFC made up of a passively fed electrolyzer 21 without pumps for liquids and a self breathing fuel cell 34 is also feasible.

6. Calculations for a Comparison between DMFC and EDMFC

6.1 Physical Properties

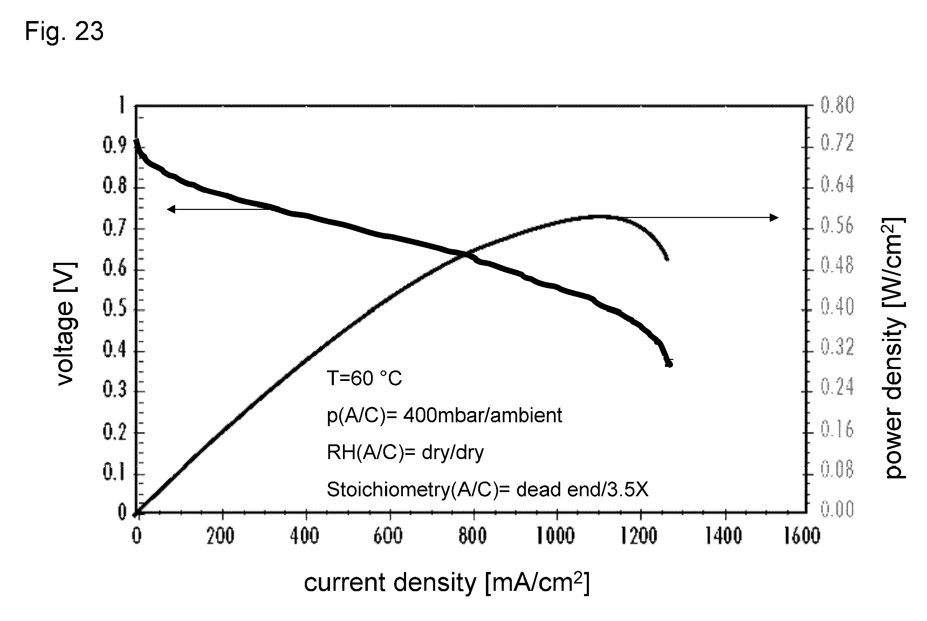

Table 1 contains the results of some calculations regarding a comparison between the physical properties of a conventional DMFC and a EDMFC under different operating conditions. The data for the DMFC are taken from: DOHLE, H.; SCHMITZ, H.; BEER, T.; MERGEL, J.; STOLTEN, D.: Journal of Power Sources 106 (2002) 313-322. The EDMFC data are calculated from the U-I characteristics of an electrolyzer in Figure 22 and of a fuel cell in Figure 23. The data of Figure 22 are data regarding Gore TM MEA. It is further assumed, that the electrolyzer 21 runs at different temperatures, whereas the fuel cell 34 is running at 60 °C in a dead end mode under ambient conditions and λ(air) = 3,5. For calculating the value listed in Table 1 an area of 1 cm$^2$ of the electrolyzer 21 with a catalyst loading of 4.2 mg/cm$^2$ PtRu at the anode side and 0.5 mg/cm$^2$ Pt at the cathode side has been assumed. Then Figure 22 has been used to look up the current, which can be expected for some particular operating voltage and temperature. The equivalent $H_2$ from that current is assumed to be consumed in the fuel cell 34 at a particular temperature and cell voltage. Taking standard performance characteristics of fuel cells 34 the active area and catalyst needed to support that much current is calculated. The system power $P_{syst}$ produced under these conditions is also calculated. Then the DMFC active area and catalyst loading needed to achieve the same power is calculated for different conditions of temperature, cathode pressure and air flow.

Explanation of some examples from Table 1:

Example 1: The performance at temperature 77 °C is calculated. The data for the performance of the DMFC are taken from the reference cited above. The electrolyzer data are taken from our measurements which are shown in Figure 22. The 1 cm$^2$ area of the MEA 22 of the electrolyzer 21 at 77 °C with 4.2 mg/cm$^2$ PtRu results in a current density of 343 mA/cm$^2$ at 0.4 V. Then H$_2$ corresponding to this current is fed to the fuel cell 34. Taking the data from Figure 23, a 2.3 cm$^2$ area of the MEA 35 is required, when the fuel cell 34 operates at 0,8 V. If the fuel cell voltage is at 0.8 V a voltage amounting to 0.5 V can be applied to the external load 46. Since 1 cm$^2$ of the MEA 22 the electrolyzer will result in a current of 343 mA and since the external load is supplied with a voltage of 0.4 V the total power supplied to the external load 46 is 137 mW.

Then the area and catalyst loading needed for same power is calculated for the DMFC. A DMFC operating at 77 °C, with ambient pressure cathode, has a power density of 32 mW/cm$^2$, with a catalyst loading of 6,2 mg/cm$^2$. So for 137 mW, a MEA area of 4,28 cm$^2$ and overall 26,5 mg catalyst loading for the DMFC is needed. However, the total loading catalyst for the EDMFC resulting in the same power outputamounts only to 7 mg.

The calculations for further examples 2 to 10 are listed in the Table 1. Generally operating the electrolyzer 21 at higher temperature and at higher current densities and the fuel cell 34 at higher cell voltages and lower current densities minimize the catalyst needed for EDMFC system.

6.2 Calculations for a Power Source of 50 W

DMFC from FZ Jülich published data:

Operating parameters:

50 mW/cm$^2$ at 0.34 V
3.9 mg/cm$^2$ PtRu unsupported catalyst at anode
2.3 mg/cm$^2$ Pt unsupported catalyst at cathode
1.5 bar cathode with airflow stoichiometry 3-4.
70 °C operation

```
For 50 W total power 1000 cm² of MEA active area is required,

which result in a catalyst loading of 1000 x (3.9 mg PtRu +

2.3 mg Pt) = 3.9 g PtRu + 2.3 g Pt
```

Cost calculation:

```
3.9 g * 52 $/g (for PtRu) + 2.3 g * 71 $/g (for Pt) = 366 $
```

Total active MEA area needed in DMFC: 1000 cm$^2$

EDMFC scheme:

Operating parameters: Single cell voltage: 0.35 V

Electrolyzer 21: 0.4 V at 90 °C, with 4.2 mg/cm$^2$ PtRu at anode and 0.5 mg/cm$^2$ Pt at cathode and 500 mA/cm$^2$.

Fuel cell 34: 0.75 V at 300 mA/cm$^2$, Gore TM MEA 58 series data at 60 °C, dead end anode and ambient cathode with dry air stoichiometry 3.5: 0.5 mg/cm$^2$ PtRu at anode and 0.5 mg/cm$^2$ Pt at cathode.

For 50W at 0.35V, the current required is 143 A.

```
For a current of 143 A with the abovementioned electrolyzer,
286 cm² of active area is needed resulting in 286 * (4.2 mg
PtRu + 0.5 mg Pt) = 1201 mg PtRu + 143 mg Pt
```

```
For a current of 143 A at above mentioned conditions, 477 cm²
of MEA active area is needed in the fuel cell.
= 477 * (0.5 mg PtRu + 0.5 mg Pt)
= 238 mg PtRu + 238 mg Pt
```

Total catalyst required in EDMFC: 1.439 g PtRu + 381 mg Pt

Cost calculation:

```
1.439 g * 52 $/g + 0.381 g * 71 $/g = 101.8 $
```

Total active MEA area needed in EDMFC: 763 cm²

It is important to note that the EDMFC 20 requires 25% less MEA active area and 3.6 times less catalyst costs for this configuration. The EDMFC 20 would also have fuel utilization up to nearly 100%.

7. Summary of the Invention

By physical separation of anode and cathode processes the EDMFC scheme improves the fuel utilization efficiency close to 100% and avoids fuel crossover and cathode flooding problems. The requirements on the flow stoichiometry are similar to a conventional PEMFC and pressurized operation is not required. The improvements in cathode performance in the EDMFCs allow to considerably reduce the catalyst loading of the effective cathode compared to the catalyst loading of a conventional DMFC. The EDMFC scheme allows the operation of the electrolyzer at elevated temperatures because of its self-generated pressure of $H_2$ and $CO_2$ gases. The high temperature operation entails lower anode catalyst loadings in the electrolyzer. For example, the autonomous operation of the electrolyzer 21 in the EDMFC at high temperature (80-100 °C) lead to five to six times lower anode catalyst loadings in comparison to a conventional DMFC running at 50-60°C. The new EDMFC concept is suitable for portable applications and all prospective applications of conventional DMFC. The EDMFC system can be built smaller in size and at low production costs compared to a conventional DMFC. Furthermore EDMFCs can be designed in a flexible way depending on the system requirement. These advantages are due to the fact, that the EDMFCs combines the advantageous properties of PEMFCs and electrochemical electrolyzers together with the advantageous properties of organic fuels, which provide a high energy densities.

Throughout the description and claims of this specification, the singular encompasses the plural unless the context other-wise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

Table 1:

| | T (°C) | $U_{cell}$ (V) | P (bar (abs)) | j (mA/ cm$^2$) | PD mW /cm$^2$ | $P_{syst}$ (mW) | MEA Area (cm$^2$) | Effective Cathode Catalyst Loading (mg) | $m_{cat\ total}$ (mg) |
|---|---|---|---|---|---|---|---|---|---|
| 1 | | | | | | | | | |
| DMFC | 77 | 0,4 | 1 | 80 | 32 | 137 | 4,28 | 9,8 | 26,5 |
| EDMFC | | 0,4 | 1 | | 41,5 | 137 | 3,3 | 2,8 | 7 |
| EL | 77 | 0,4 | 1 | 343 | | | 1 | | 4,7 |
| PEM | 60 | 0,8 | 1 | 150 | | | 2,3 | | 2,3 |
| | | | | | | | | | |
| 2 | | | | | | | | | |
| DMFC | 70 | 0,35 | 1,5 | | 50 | 92,7 | 1,85 | 4,25 | 11,5 |
| EDMFC | | 0,35 | | | 50 | 92,7 | 1,85 | 1,35 | 5,55 |
| EL | 70 | 0,4 | 1 | 265 | | | 1 | | |
| PEM | 60 | 0,75 | 1 | 310 | | | 0,85 | | |
| | | | | | | | | | |
| 2.1 | | | | | | | | | |
| DMFC | 70 | 0,35 | 1,5 | | 50 | 196 | 4 | | 24,8 |
| EDMFC | | 0,35 | 1 | | 70 | 196 | 2,8 | | 6,5 |
| EL | 90 | 0,4 | 1 | 560 | | | 1 | | 4,7 |
| PEM | 60 | 0,75 | 1 | 310 | | | 1,8 | | 1,8 |
| | | | | | | | | | |
| 3 | | | | | | | | | |
| DMFC | 77 | 0,35 | 1 | 100 | 35 | 120 | 3,42 | 7,86 | 21 |
| EDMFC | | 0,35 | | | 57 | 120 | 2,1 | 1,5 | 5,8 |
| EL | 77 | 0,4 | 1 | 343 | | | 1 | | 4,7 |
| PEM | 60 | 0,75 | 1 | 310 | | | 1,1 | | 1,1 |
| | | | | | | | | | |
| 4 | | | | | | | | | |
| DMFC | 80 | 0,4 | 3 | | 80 | 148 | 1,85 | 4,25 | 11,5 |
| EDMFC | | 0,4 | | | 42,7 | 148 | 3,47 | 2,97 | 7,16 |
| EL | 80 | 0,4 | 1 | 370 | | | 1 | | |
| PEM | 60 | 0,8 | 1 | 150 | | | 2,47 | | |
| 5 | | | | | | | | | |
| DMFC | 80 | 0,4 | 3 | | 80 | 76 | 0,95 | 2,18 | 5,89 |
| EDMFC | | 0,4 | | | 47 | 76 | 1,61 | 1.1 | 5,31 |
| EL | 80 | 0,35 | 1 | 190 | | | 1 | | 4,7 |
| PEM | 60 | 0,75 | 1 | 310 | | | 0,61 | | 0,61 |
| | | | | | | | | | |

(continued)

| | T (°C) | $U_{cell}$ (V) | P (bar (abs)) | j (mA/cm$^2$) | PD mW/cm$^2$ | $P_{syst}$ (mW) | MEA Area (cm$^2$) | Effective Cathode Catalyst Loading (mg) | $m_{cat\ total}$ (mg) |
|---|---|---|---|---|---|---|---|---|---|
| 6 | | | | | | | | | |
| DMFC | 80 | 0,4 | 3 | | 80 | 200 | 2,5 | 5,75 | 15,5 |
| EDMFC | | 0,4 | | | 53 | 200 | 3,78 | 3,28 | 7,48 |
| EL | 90 | 0,3861 | | 500 | | | 1 | | |
| PEM | 60 | 0,79 | 1 | 180 | | | 2,78 | | |
| | | | | | | | | | |
| 7 | | | | | | | | | |
| DMFC | 80 | 0,4 | 3 | | 80 | 139 | 1,74 | 4,00 | 10,8 |
| EDMFC | | 0,4 | | | 65 | 139 | 2,12 | 1,62 | 5,82 |
| EL | 90 | 0,35 | 1 | 348 | | | 1 | | |
| PEM | 60 | 0,75 | 1 | 310 | | | 1,12 | | |
| | | | | | | | | | |
| 8 | | | | | | | | | |
| DMFC | 80 | 0,4 | 3 | | 80 | 49,6 | 0,62 | 1,42 | 3,8 |
| EDMFC | | 0,4 | | | 40,3 | 49,6 | 1,23 | 0,73 | 4,93 |
| EL | 90 | 0,3 | 1 | 124 | | | 1 | | 4,7 |
| PEM | 60 | 0,7 | 1 | 530 | | | 0,23 | | |
| | | | | | | | | | |
| 9 | | | | | | | | | |
| DMFC | 80 | 0,3 | 3 | | 100 | 174 | 1,74 | 4,0 | 10,8 |
| EDMFC | | 0,3 | 1 | | 83 | 174 | 2,1 | 1,5 | 5,8 |
| EL | 90 | 0,4 | 1 | 580 | | | 1 | | 4,7 |
| PEM | 60 | 0,7 | 1 | 530 | | | 1,1 | | 1,1 |
| | | | | | | | | | |
| | | | | | | | | | |
| 10 | | | | | | | | | |
| DMFC | 22 | 0,4 | 1 | 18,9 | 7,6 | 7,2 | 0,95 | 2,18 | 5,89 |
| EDMFC | | 0,4 | 1 | | | 7,2 | 1,12 | 0,62 | 4,82 |
| EL | 25 | 0,4 | 1 | 18 | | | 1 | | 4,7 |
| PEM | 60 | 0,8 | 1 | 150 | | | 0,12 | | 0,12 |
| | | | | | | | | | |
| 11 | | | | | | | | | |
| DMFC | 80 | 0,3 | 3 | | 100 | 348 | 3,48 | 8,0 | 21,6 |
| EDMFC | | 0,3 | | | 109 | 348 | 3,18 | 2,68 | 6,88 |
| EL | 110 | 0,4 | 3 | 1160 | | | 1 | | 4,7 |

(continued)

| | T (°C) | $U_{cell}$ (V) | P (bar (abs)) | j (mA/ $cm^2$) | PD mW /$cm^2$ | $P_{syst}$ (mW) | MEA Area ($cm^2$) | Effective Cathode Catalyst Loading (mg) | $m_{cat\ total}$ (mg) |
|---|---|---|---|---|---|---|---|---|---|
| PEM | 60 | 0,7 | 1 | 530 | | | 2,18 | | 2,18 |

**Claims**

1. A system for generating electrical energy comprising:

   - a fuel reservoir (67, 81, 87, 113) for storage of an organic fuel (68);
   - an electrochemical converter arranged for the generation of electrical energy by the consumption of the organic fuel (68) and having electrical current terminals connectable to an external load (46, 90, 99, 109) for the currents

   **characterized in that**

   - the converter comprises an electrochemical reformer (21, 86, 88, 93, 94, 97, 108) provided with electrical current terminals and arranged for converting the fuel (68) from the fuel reservoir into fuel gas provided at a fuel gas outlet of the reformer (21, 86, 88, 93, 94, 97, 108);
   - the converter further comprises an electrochemical generator (34, 89, 92, 96, 98, 105) having a fuel gas inlet connected to the fuel gas outlet of the reformer (21, 86, 88, 93, 94, 97, 108) and comprising the electrical current terminals for the external load (46, 90, 99, 109) and arranged for the production of electrical energy using the fuel gas;
   - an electrical connection between the electrical current generator (34, 89, 92, 96, 98, 105) and the reformer (21, 86, 88, 93, 94, 97, 108) supplies electrical energy generated by the generator (34, 89, 92, 96, 98, 105) to the electrical current terminals of the reformer (21, 86, 88, 93, 94, 97, 108) and that
   - at least one elementary cell (21) of the reformer (21, 86, 88, 93, 94, 97, 108) has a lower operational voltage than at least one elementary cell (34) of the generator (34, 89, 92, 96, 98, 105).

2. The system according to claim 1,
   **characterized in that**
   the sum of the electrical currents flowing through each elementary cell (34) of the generator (34, 89, 92, 96, 98, 105) is less than the sum of the electrical currents flowing through each elementary cell (21) of the reformer (21, 86, 88, 93, 94, 97, 108).

3. The system according to claim 1 or 2,
   **characterized in that**
   the elementary cell of the reformer (21, 86, 88, 93, 94, 97, 108) is an electrolyzer (21) comprising an anode (24) and a cathode (25) and that the elementary cell of the generator (34, 89, 92, 96, 98, 105) is a fuel cell (34) comprising an anode (37) and a cathode (38).

4. The system according to any one of claims 1 to 3,
   **characterized in that**
   the system is arranged for feeding the fuel arriving at the fuel gas outlet of the reformer (21, 86, 88, 93, 94, 97, 108) back to the fuel reservoir (67, 81, 87, 113).

5. The system according to any one of claims 1 to 4,
   **characterized in that**
   a separator (33, 72, 75, 81) disposed between reformer (21, 86, 88, 93, 94, 97, 108) and generator (34, 89, 92, 96, 98, 105) is used for separating liquids from the fuel gas supplied to the generator (34, 89, 92, 96, 98, 105).

6. The system according to claim 5,
   **characterized in that**
   the reformer (21) is connected to the generator (34) by a conduit (71, 76), which is provided with the separator (33, 81).

**7.** The system according to claim 5 or 6,
**characterized in that**
the separator (81) is additional supplied with waste gas from the fuel side of the reformer (21) and that a condensate is conducted back to the fuel side of the reformer (21).

**8.** The system according to claim 5,
**characterized in that**
the reformer (86) is disposed in a fuel tank (87) arranged for condensing fuel from the waste gas and supplying fuel gas and waste gas to the generator (34).

**9.** The system according to any one of claims 1 to 8,
**characterized in that**
the reformer (21, 86, 88, 93, 94, 97, 108) is operable at a pressure above atmospheric pressure the pressure being generated on the fuel side by waste gas and on the fuel gas side by fuel gas.

**10.** The system according to any one of claims 1 to 9,
**characterized in that** the reformer (21, 86, 88, 93, 94, 97, 108) is run at an higher operational pressure than the generator (34, 89, 92, 96, 98, 105).

**11.** The system according to any one of claims 1 to 10,
**characterized in that**
at least one component selected from the group comprising the reformer (21, 86, 88, 93, 94, 97, 108), a separator (33, 72, 75, 81), a fuel tank (87) and a condenser (116) for the waste gas is pressurized for reducing the amount of fuel vapor arriving at the generator (34, 89, 92, 96, 98, 105) together with fuel gas.

**12.** The system according to any one of claims 1 to 11,
**characterized in that**
the voltage of each elementary cell of the generator (34, 89, 92, 96, 98, 105) is periodically pulsed to a voltage less than 0.5 Volt.

**13.** The system according to any one of claims 1 to 12,
**characterized in that**
the reformer (21, 86, 88, 93, 94, 97, 108) is operable at a operational temperature above 70 °C in a self-pressurized mode without using gas compressors and that the generator (34, 89, 92, 96, 98, 105) is operable without elevated operational pressures on an exhaust gas side.

**14.** The system according to any one of claims 1 to 13,
**characterized in that**
the reformer (21, 86, 88, 93, 94, 97, 108) is operable at a higher operational temperature than the generator (34, 89, 92, 96, 98, 105).

**15.** The system according to any one of claims 1 to 14,
**characterized in that**
the catalyst loading of an electrode (24) on the fuel side of at least one elementary cell (21) of the reformer (21, 86, 88, 93, 94, 97, 108) is higher than the catalyst loading of an electrode (25) on the fuel gas side of the elementary cell (21) of the reformer (21, 86, 88, 93, 94, 97, 108).

**16.** The system according to any one of claims 1 to 15,
**characterized in that**
the total amount of catalyst needed for an electrode (24) on the fuel side of the reformer (21, 86, 88, 93, 94, 97, 108) is higher than the total amount of catalyst needed for an effective cathode (59) comprising the electrode (25) on the fuel gas side of the reformer (21, 86, 88, 93, 94, 97, 108) and the electrodes (37, 38) in the generator (34, 89, 92, 96, 98, 105).

**17.** The system according to claim 15 or 16,
**characterized in that**
a fuel tolerant catalyst is used for an electrode (37) on the fuel gas side of the generator (34, 89, 92, 96, 98, 105).

**18.** The system according to any one of claims 15 to 17,
**characterized in that**
the system power per total catalyst loading exceeds 100 W/g at an actual power density above 100 mW/cm$^2$ and an energy conversion effiency between 10% and 30%.

**19.** The system according to any one of claims 15 to 17,
**characterized in that**
the system power per total catalyst loading exceeds 30 W/g at an actual power density above 40 mW/cm$^2$ and an energy conversion effiency above 30%.

**20.** The system according to any one of claims 1 to 19,
**characterized in that**
the reformer (21, 86, 88, 93, 94, 97, 108) comprises a porous membrane electrode assembly (60, 61, 64) and porous gas diffusion layers (62, 63) which are permeable for the fuel, the produced waste gas and fuel gas.

**21.** The system according to claim 20,
**characterized in that**
the reformer (21, 86, 88, 93, 94, 97, 108) comprises a sequence of elementary cells (60) with an anode and a cathode wherein the anode of a particular elementary cell (60) is arranged next to the cathode of an adjacent elementary cell (60) and the cathode of the particular elementary cell (60) is arranged next to the anode of another adjacent elementary cell (60) or wherein an anode of a particular elementary cell (60) is arranged next to the anode of an adjacent elementary cell and a cathode of a particular elementary cell (60) is arranged next to the cathode of another adjacent elementary cell.

**22.** The system according to claim 20 or 21,
**characterized in that**
the catalyst layer and gas diffusion layer on the anode side of an elementary cell (60) of the porous membrane electrode assembly (60, 61, 64) is hydrophilic.

**23.** The system according to any one of claims 20 to 22,
**characterized in that**
the catalyst layer and gas diffusion layer on the cathode side of an elementary cell (60) of the porous membrane electrode assembly (60, 61, 64) is hydrophobic.

**24.** The system according to any one of claims 1 to 23,
**characterized in that**
the generator (89), the reformer (88) and the external load (90) are electrically connected in series.

**25.** The system according to claim 24,
**characterized in that**
the sum of the voltages on the electrical current terminals of the generator (34, 89, 92, 96, 98, 105) is greater than the sum of voltages applied to the electrical current inputs of the reformer (21, 86, 88, 93, 94, 97, 108).

**26.** The system according to any one of claims 1 to 23,
**characterized in that**
the generator (92), the reformer (93, 94) and the external load (90) are electrically connected in parallel.

**27.** The system according to any one of claim 1 to 26,
**characterized in that**
a unit (96) of the generator and the reformer (97) are electrically interconnected forming a device for the production of fuel gas supplied to another fuel gas consuming unit (98) of the generator.

**28.** The system according to claim 27,
**characterized in that**
the generator comprises at least two subunits (96, 98) connected in parallel with respect to the gas flow or comprises at least two subunits (96, 98) connected in series with respect to the flow of the fuel gas.

**29.** The system according any one of claims 1 to 28,

**characterized in that**
the system is provided with a recovery unit (106, 118, 119) arranged for the recovery of energy from pressurized fuel gas or waste gas.

30. The system according to any one of claims 1 to 25,
**characterized in that** an electronic control (45, 102, 104) unit provided with energy from the generator (34, 89, 92, 96, 98, 105) is arranged for adjusting the voltage applied to the reformer (21, 86, 88, 93, 94, 97, 108) and to the external load (46, 90, 90, 99, 109).

31. The system according to any one of claims 1 to 30,
**characterized in that**
hydrogen is used as a fuel gas, a hydrocarbon containing oxygen is used as a fuel and the waste gas produced by the reformer (21, 86, 99, 93, 94, 97, 108) is carbon dioxide.

32. The system according to claim 31,
**characterized in that**
methanol or ethanol is used as a fuel.

Fig. 1

EP 1 986 264 A1

Prior Art

Fig. 2

Fig. 3

CO$_2$ ←

H$_2$O ←

OH$^-$

Liq. H$_2$O

Liq. CH$_3$OH

By Diffusion

CH$_3$OH →

← O$_2$

Prior Art

EP 1 986 264 A1

Fig. 4

EP 1 986 264 A1

EP 1 986 264 A1

Fig. 5

Fig. 6

Fig. 7

EP 1 986 264 A1

Fig. 8

Fig. 9

Fig. 10

Fig. 11

Fig. 12

Fig. 13

EP 1 986 264 A1

EP 1 986 264 A1

Fig. 14

EP 1 986 264 A1

Fig. 15

0.8V — 92

2i

fuel cell

$H_2$: 2i+ $\Delta$i

0.4V          0.4V

i+$\Delta$i/2

EL1          EL2

93            94

0.8V

i-$\Delta$i/2

load

90

Fig. 16

EP 1 986 264 A1

EP 1 986 264 A1

## Fig. 17

fuel cell stack

electrolyzer stack

fuel cell stack

load

H₂ supply

H₂ supply

H₂ exit

96

97

98

99

100

## Fig. 18

101

96          H₂ supply          98

H₂ supply

fuel cell stack          fuel cell stack          H₂ exit

electrolyzer stack          load

97          99

EP 1 986 264 A1

Fig. 19

EP 1 986 264 A1

Fig. 20

Fig. 21

Fig. 22

Fig. 23

power density [W/cm²]

0.80
0.72
0.64
0.56
0.48
0.40
0.32
0.24
0.16
0.08
0.00

voltage [V]

1
0.9
0.8
0.7
0.6
0.5
0.4
0.3
0.2
0.1

current density [mA/cm²]

0    200   400   600   800   1000   1200   1400   1600

T=60 °C
p(A/C)= 400mbar/ambient
RH(A/C)= dry/dry
Stoichiometry(A/C)= dead end/3.5X

**European Patent Office**

**EUROPEAN SEARCH REPORT**

Application Number

EP 07 11 7793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | JP 2006 339071 A (NIPPON TELEGRAPH & TELEPHONE) 14 December 2006 (2006-12-14)<br><br>* paragraph [0015] - paragraph [0017]; figure 1 *<br>* paragraphs [0019], [0020], [0033] *<br>----- | 1-7,<br>9-21,26,<br>31,32<br>8 | INV.<br>H01M8/06<br>C25B1/02<br>C25B9/10 |
| X | US 2004/137290 A1 (WOODS RICHARD ROOT [US] ET AL) 15 July 2004 (2004-07-15)<br><br>* paragraphs [0005], [0023]; figures 1,3b *<br>* paragraph [0015] - paragraph [0018] *<br>* paragraphs [0042], [0043], [0045], [0046] *<br>----- | 1-6,<br>9-14,<br>16-25,<br>30-32 | |
| X | JP 2004 137592 A (SHIMAMUNE TAKAYUKI; YOSHIKAWA AKIRA) 13 May 2004 (2004-05-13)<br><br>* paragraph [0015] - paragraph [0017]; figures 1-3 *<br>----- | 1-3,5,6,<br>9-14,<br>16-21,<br>24,25,<br>31,32 | TECHNICAL FIELDS SEARCHED (IPC)<br><br>H01M<br>C25B |
| X | US 2001/033954 A1 (GYOTEN HISAAKI [JP] ET AL) 25 October 2001 (2001-10-25)<br><br>* paragraph [0023] - paragraph [0027]; figure 1 *<br>-----<br>-/-- | 1-3,<br>9-14,<br>16-20,<br>23-25,<br>31,32 | |

The present search report has been drawn up for all claims

| Place of search | Date of completion of the search | Examiner |
|---|---|---|
| Munich | 1 February 2008 | Raimondi, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 11 7793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 06 325782 A (SUMITOMO ELECTRIC INDUSTRIES) 25 November 1994 (1994-11-25)<br><br>* abstract; figures 1,3 *<br>* paragraph [0075] - paragraph [0077] *<br>* paragraph [0081] - paragraph [0084] *<br>----- | 1-3, 9-14, 16-20, 22,31,32 | |
| X | JP 2005 240064 A (SEIKO EPSON CORP) 8 September 2005 (2005-09-08)<br><br>* abstract *<br>* paragraph [0026]; figure 1 *<br>----- | 1-3, 9-14, 16-20, 30-32 | |
| X | US 2005/098443 A1 (GOMEZ RODOLFO ANTONIO M [AU]) 12 May 2005 (2005-05-12)<br><br>* paragraphs [0026], [0038], [0047], [0067], [0068], [0078], [0085]; figures 3,6 *<br>----- | 1-4, 9-14, 16-19, 27-29, 31,32 | TECHNICAL FIELDS SEARCHED (IPC) |
| X | US 3 600 228 A (CONTI ANTHONY BASIL LA) 17 August 1971 (1971-08-17)<br><br>* column 4, line 43 - column 5, line 12; figure 2 *<br>----- | 1-4, 9-14, 16-19, 24,25, 31,32 | |
| Y | WO 03/101603 A (M & R CONSULTING DBA MED E CEL [US]) 11 December 2003 (2003-12-11)<br>* page 5, line 22 - line 33; figure 7 *<br>----- | 8 | |
| | -/-- | | |

The present search report has been drawn up for all claims

| Place of search | Date of completion of the search | Examiner |
|---|---|---|
| Munich | 1 February 2008 | Raimondi, Fabio |

EPO FORM 1503 03.82 (P04C01)

**European Patent Office**

## EUROPEAN SEARCH REPORT

Application Number

EP 07 11 7793

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 432 284 B1 (NARAYANAN SEKHARIPURAM R [US] ET AL) 13 August 2002 (2002-08-13) <br> * column 2, line 52 - column 3, line 48; figure 1 * <br> * column 4, line 66 - column 7, line 14 * <br> * column 10, line 14 - line 30 * <br> ----- | 1-32 | |
| | | | **TECHNICAL FIELDS SEARCHED (IPC)** |

The present search report has been drawn up for all claims

| Place of search | Date of completion of the search | Examiner |
|---|---|---|
| Munich | 1 February 2008 | Raimondi, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 07 11 7793

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2008

| Patent document cited in search report | | | Publication date | Patent family member(s) | | | Publication date |
|---|---|---|---|---|---|---|---|
| JP 2006339071 | A | | 14-12-2006 | NONE | | | |
| US 2004137290 | A1 | | 15-07-2004 | NONE | | | |
| JP 2004137592 | A | | 13-05-2004 | NONE | | | |
| US 2001033954 | A1 | | 25-10-2001 | JP | 2001297779 | A | 26-10-2001 |
| JP 6325782 | A | | 25-11-1994 | JP | 3360349 | B2 | 24-12-2002 |
| JP 2005240064 | A | | 08-09-2005 | NONE | | | |
| US 2005098443 | A1 | | 12-05-2005 | WO | 0244081 | A1 | 06-06-2002 |
| | | | | AU | 2300602 | A | 11-06-2002 |
| | | | | CN | 1478056 | A | 25-02-2004 |
| | | | | DE | 10196986 | T5 | 06-05-2004 |
| | | | | GB | 2388120 | A | 05-11-2003 |
| US 3600228 | A | | 17-08-1971 | NONE | | | |
| WO 03101603 | A | | 11-12-2003 | NONE | | | |
| US 6432284 | B1 | | 13-08-2002 | US | 6533919 | B1 | 18-03-2003 |

EPO FORM P0459

For more details about this annex : see Official Journal of the European Patent Office, No. 12/82

**REFERENCES CITED IN THE DESCRIPTION**

**Patent documents cited in the description**

- US 5599638 A
- US 6242122 B1
- US 6869716 B2
- US 20030095872 A1

**Non-patent literature cited in the description**

- **DOHLE, H. ; SCHMITZ, H. ; BEWER, T. ; MERGEL, J. ; STOLTEN, D.** *Journal of Power Sources,* 2002, vol. 106, 313-322
- **DOHLE, H. ; MERGEL, J. ; STOLTEN, D.** *Journal of power sources,* 2002, vol. 111, 268-282
- **ALONSO-VANTE, N. ; CATTARIN, S. ; MUSIANI, M.** *Journal of Electroanalytical Chemistry,* 2000, vol. 481, 200-207
- **ALONSO-VANTE, N. ; BOGDANOFF, P. ; TRIBUTSCH, H.** *Journal of Catalysis,* 2000, vol. 190, 240-246
- **RUSE, YANG, H. ; ALONSO-VANTE, N. ; LEGER, J. M. ; LAMY, C.** *Journal of Physical Chemistry,* 2004, vol. B 108, 1938-1947
- **PT-CR ; YANG, H. ; COUTANCEAU, C. ; LEGER, J. M. ; ALONSO-VANTE, N. ; LAMY, C.** *Journal of Electroanalytical Chemistry,* 2005, vol. 576, 305-313
- **YANG H. ; VOGEL, W. ; LAMY, C. ; ALONSO-VANTE, N.** *Journal of Physical Chemistry,* 2004, vol. B 108, 11024-11034
- **DOHLE, H. ; SCHMITZ, H. ; BEER, T. ; MERGEL, J. ; STOLTEN, D.** *Journal of Power Sources,* 2002, vol. 106, 313-322